# EUROPEAN PATENT SPECIFICATION

(11) **EP 4 394 183 B1**
(45) Date of publication and mention of the grant of the patent: **18.02.2026**
(21) Application number: 23210654.2
(22) Date of filing: 17.11.2023
(51) Int. Cl.: F04C 18/02, F04C 23/00, F04C 29/00

(54) **ELECTRIC COMPRESSOR WITH MOTOR FIXED BY CLAMPING MECHANISMS**
ELEKTRISCHER VERDICHTER MIT MOTOR FIXIERT DURCH KLEMMMECHANISMEN
COMPRESSEUR ÉLECTRIQUE AVEC MOTEUR FIXÉ PAR DES ÉLÉMENTS DE SERRAGE

(30) Priority: 29.12.2022 US 202218147913
(43) Date of publication of application: 03.07.2024
(73) Proprietor: MAHLE International GmbH, 70376 Stuttgart (DE)
(72) Inventor: SMITH, Tyler, Bath, New York 14810 (US); BOWMAN, Brett, Lockport, New York 14094 (US)
(74) Representative: BRP Renaud & Partner mbB Rechtsanwälte Patentanwälte Steuerberater

(56) References cited:
- EP-A1- 3 678 285
- JP-A- 2007 049 842
- KR-A- 20210 003 650
- US-A- 5 873 710
- US-A1- 2017 040 864
- US-A1- 2017 284 396
- US-A1- 2022 216 775

## Description

### Field of the Invention

The invention relates generally to electric compressors, and more particularly to an electric compressor that compresses a refrigerant using a scroll compression device.

### Background of the Invention

Compressors have long been used in cooling systems. In particular, scroll-type compressors, in which an orbiting scroll is rotated in a circular motion relative to a fixed scroll to compress a refrigerant, have been used in systems designed to provide cooling in specific areas. For example, such scroll-type compressors have long been used in the HVAC systems of motor vehicles, such as automobiles, to providing air-conditioning. Such compressors may also be used, in reverse, in applications requiring a heat pump. Generally, these compressors are driven using rotary motion derived from the automobile's engine.

With the advent of battery-powered or electric vehicles and/or hybrid vehicles, in which the vehicle may be solely powered by a battery at times, such compressors must be driven or powered by the battery rather than an engine. Such compressors may be referred to as electric compressors.

In addition to cooling a passenger compart of the motor vehicle, electric compressors may be used to provide heating or cooling to other areas or components of the motor vehicle. For instance, it may be desired to heat or cool the electronic systems and the battery or battery compartment, when the battery is being charged, especially during fast charging modes, as such generate heat which may damage or degrade, the battery and/or other system. It may also be used to cooling the battery during times when the battery is not being charged or used, as heat may damage or degrade the battery. Since the electric compressor may be run at various times, even when the motor vehicle is not in operation, such use, obviously, requires electrical energy from the battery, thus reducing the operating time of the battery.

Additionally, electric compressors may run at a very high speed, e.g., 2,000 RPM (or higher). Such high speed may generate unwanted levels of noise.

Generally, prior art electric compressors having a housing to contain the components of the compressors including a motor and a compression device driven by the motor to compress a refrigerant. The outer housing of the motor, which may be the stator of the motor, must be held in place relative to the housing the compressor. In some prior art compressors, a radial clamping force is applied along all, or part of, the outer diameter of the stator. The radial clamping force may be applied by an interference fit between the outer diameter of the stator and the inner diameter of the housing of 300 microns or more. This high radial clamping force may cause distortion in the geometry of the stator which may increase inefficiency in, and noise generated by, the compressor.

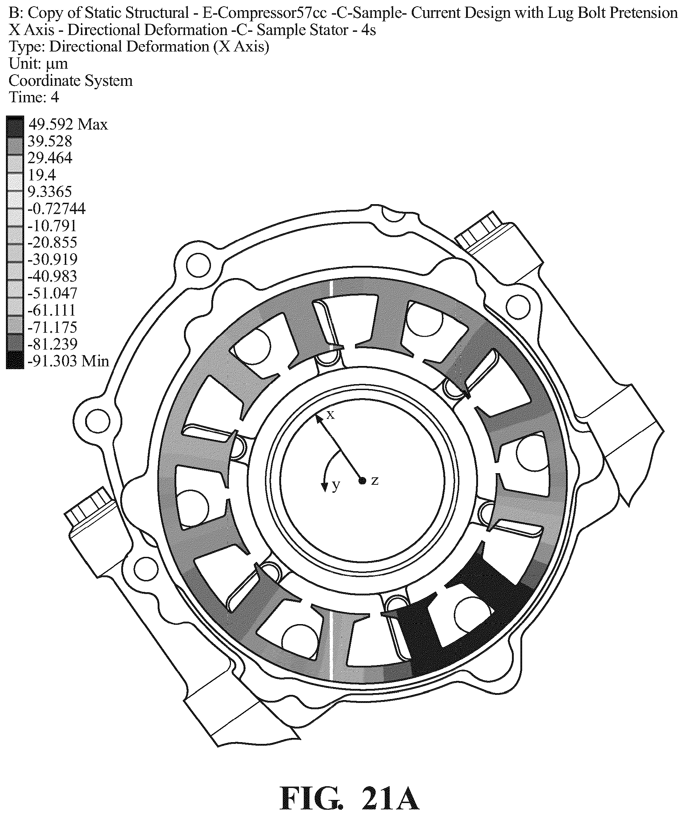

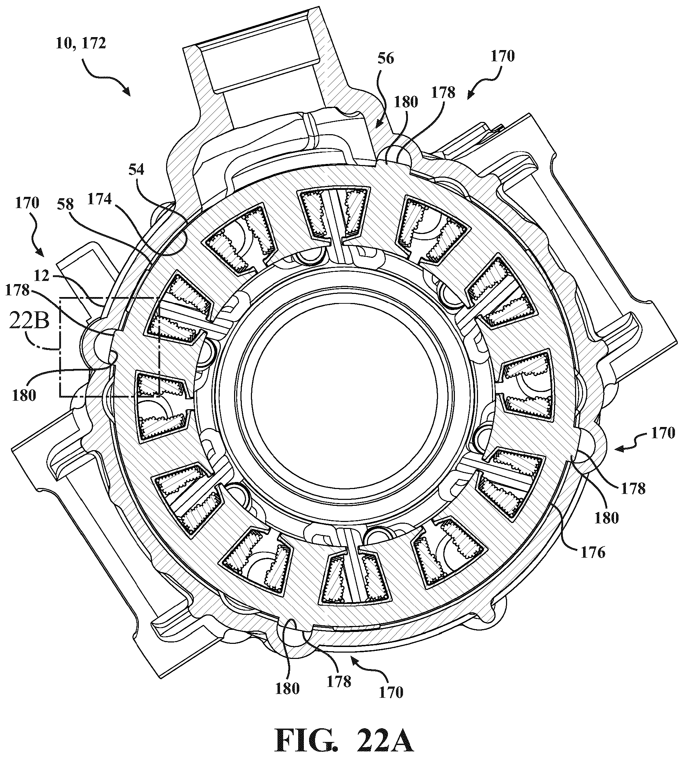

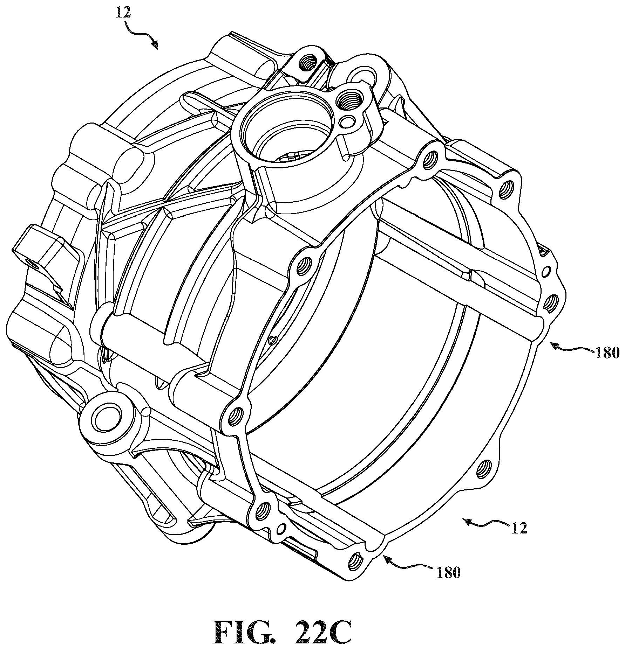

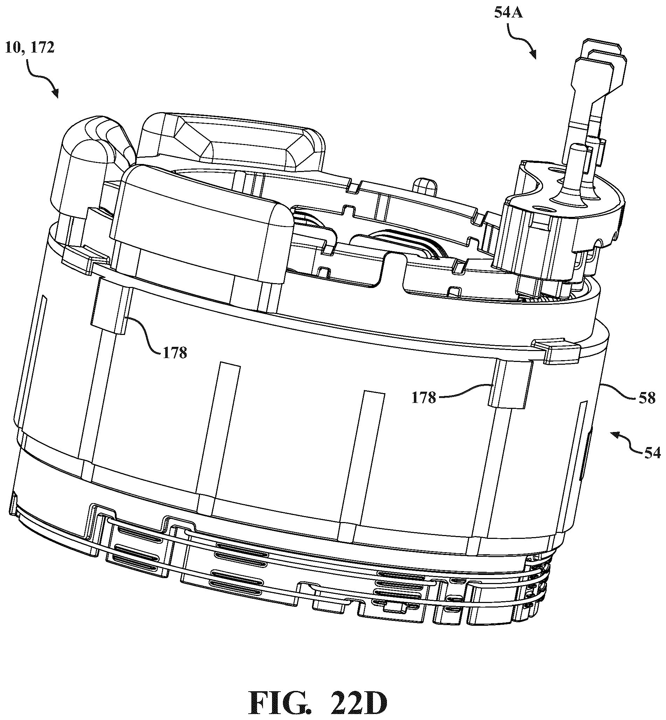

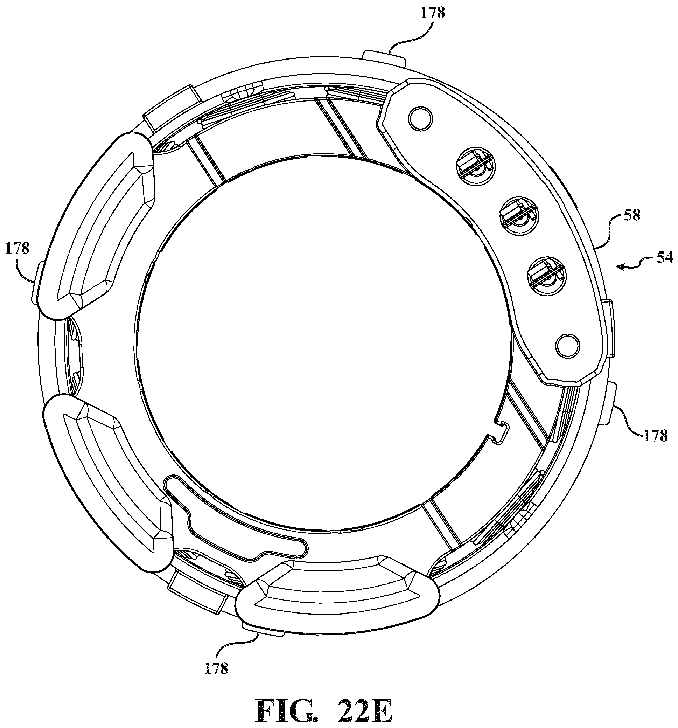

Reference is made to FIGS. 21A and 22A, in which a stator is held in place relative to a compressor housing through a radial clamping force applied by an interference fit. The compressor may be assembled, for example, by heating the housing to increase the inner diameter thereof. The motor is then inserted within an inner cavity of the housing and the housing is allowed to cool to create the interference fit. As shown in FIGS. 21A-21B, this may cause a distortion or change in the radius or outer diameter of the stator. Fig 22A is not to scale. The distortions to the radius of the stator have been emphasized for illustrations purposes. In the illustrated embodiment, the radius of the stator changed within a range of ~ (-91) microns to ~ (+49) microns.

It is thus desirable to provide an electric compressor having high efficiency, low-noise and maximum operating life.

The present invention is aimed at one or more of the problems or advantages identified above.

US 2017/040864 A1 discloses an electric compressor with an electric motor and a stator. The electric compressor further includes four or three protrusions formed protruding from either an inner periphery of a casing or an outer periphery of the stator so as to be spaced apart from each other in a circumferential direction. The stator is fixed to the casing by way of the protrusions.

US 2017/284396 A1 discloses an electric compressor includes a housing, a rotary shaft, a compression portion, a stator, a rotor, and guide members disposed between the housing and the stator and spaced away from each other in a peripheral direction of the rotary shaft. The guide members include an engagement portion projecting in a radially outward direction of the rotary shaft. The housing has in an inner peripheral surface thereof an engagement hole to receive the engagement portion.

US 5 873 710 A discloses a motor spacer which is suited for use in securely fitting a motor stator of a first diameter within a housing of a greater diameter.

US 2022/216775 A1 discloses a rotating electric machine includes a plurality of iron cores, arid a plurality of supporting members. At least one of the iron cores is supported by one of the supporting members via a resin member.

JP 2007 049842 A discloses a motor with a rotor fixed on a rotating shaft; and a stator that is disposed on the outer circumferential surface of the rotor with a small gap in-between and fixed on a support frame with bolts. Bolt insertion holes for inserting the bolts are formed in the stator core of the stator.

KR 2021 0003650 A discloses a compressor with a housing; and a motor including a stator which is press-fitted to an inner circumferential surface of the housing, and a rotor which rotates inside the stator.

EP 3 678 285 A1 discloses a stator includes a stator core including a back yoke having an annular shape and a plurality of teeth protruding radially inward of the back yoke and arranged at intervals in a circumferential direction, and insulators between which the stator core is sandwiched from both sides in an axial direction.

### BRIEF SUMMARY OF THE INVENTION

In a first embodiment of the present invention, an electric compressor configured to compress a refrigerant, is provided. The electric compressor includes a housing, a refrigerant inlet port, a refrigerant outlet port, an inverter module, a motor, a drive shaft, a plurality of clamping mechanisms, and a compression device. The housing defines an intake volume and a discharge volume and has a generally cylindrical shape and a central axis. The refrigerant inlet port is coupled to the housing and configured to introduce the refrigerant to the intake volume. The refrigerant outlet port is coupled to the housing and is configured to allow compressed refrigerant to exit the electric compressor from the discharge volume. The inverter module is mounted inside the housing and is adapted to convert direct current electrical power to alternating current electrical power. The motor is mounted inside the housing. The drive shaft is coupled to the motor. The plurality of clamping mechanisms are spaced about the outer diameter of the motor and configured to constrain the motor within housing. Thereby, each of the plurality of clamping mechanisms include a tab located on the outer diameter of the motor or on the inner diameter of the housing and a channel located on the inner diameter of the housing or on the outer diameter of the motor, each channel being configured receive a respective tab. The compression device, coupled to the drive shaft, receives the refrigerant from the intake volume and compresses the refrigerant as the drive shaft is rotated by the motor.

In a second embodiment of the present invention, an assembly having a housing, a motor, a drive shaft, and a plurality of clamping mechanisms is provided. The housing has a generally cylindrical shape and has a central axis. The motor is mounted inside the housing. The drive shaft is coupled to the motor. The plurality of clamping mechanisms are spaced about the outer diameter of the motor and are configured to constrain the motor within housing. Thereby, each of the plurality of clamping mechanisms include a tab located on the outer diameter of the motor or on the inner diameter of the housing and a channel located on the inner diameter of the housing or on the outer diameter of the motor, each channel being configured receive a respective tab.

In a third embodiment of the present invention, an electric compressor having a central axis and being configured to compress a refrigerant, is provided. The compressor includes a housing, a refrigerant inlet port, a refrigerant outlet port, an inverter section, a motor section, a compression device and a plurality of clamping mechanisms.

The housing defines an intake volume and a discharge volume. The refrigerant inlet port is coupled to the housing and is configured to introduce the refrigerant to the intake volume. The refrigerant outlet port is coupled to the housing and is configured to allow compressed refrigerant to exit the electric compressor from the discharge volume.

The inverter section includes an inverter housing, an inverter back cover, and an inverter module. The inverter back cover is connected to the inverter housing and forms an inverter cavity. The inverter module is mounted inside the inverter cavity and is adapted to convert direct current electrical power to alternating current electrical power.

The motor section includes a drive shaft and a motor. The drive shaft is located within the housing, has first and second ends, and defines a center axis. The motor is located within the housing to controllably rotate the drive shaft about the center axis.

The compression device is coupled to the drive shaft for receiving the refrigerant from the intake volume and compressing the refrigerant as the drive shaft is rotated by the motor. The compression device includes a fixed scroll and an orbiting scroll. The fixed scroll is located within, and being fixed relative to, the housing. The orbiting scroll is coupled to the drive shaft. The orbiting scroll and the fixed scroll form compression chambers for receiving the refrigerant from the intake volume and for compressing the refrigerant as the drive shaft is rotated about the center axis.

The plurality of clamping mechanisms are spaced about the outer diameter of the motor configured to constrain the motor within housing. Thereby, each of the plurality of clamping mechanisms include a tab located on the outer diameter of the motor or on the inner diameter of the housing and a channel located on the inner diameter of the housing or on the outer diameter of the motor, each channel being configured receive a respective tab.

### BRIEF DESCRIPTION OF THE SEVERAL VIEWS OF THE DRAWINGS

These and other features and advantages of the present invention will become more readily appreciated when considered in connection with the following detailed description and appended drawings.
FIG. 1A is first perspective view an electric compressor, according to an embodiment of the present invention.
FIG. 1B is a partial view of the electric compressor of FIG. 1A with a center housing removed.
FIG. 2 is a second perspective view of the electric compressor of FIG. 1A.
FIG. 3 is a first side view of the electric compressor of FIG. 1A.
FIG. 4 is a second side view of the electric compressor of FIG. 1A.
FIG. 5 is a front view of the electric compressor of FIG. 1A.
FIG. 6 is a rear view of the electric compressor of FIG. 1A.
FIG. 7 is a top view of the electric compressor of FIG. 1A.
FIG. 8 is a bottom view of the electric compressor of FIG. 1A.
FIG. 9 is a first cross-sectional view of the electric compressor of FIG. 1A.
FIG. 10 is a second cross-sectional view of the electric compressor of FIG. 1A.
FIG. 11 is an exploded view of an inverter of the electric compressor of FIG. 1A.
FIG. 12 is an exploded view of a portion of the electric compressor of FIG. 1, including a motor and drive shaft.
FIG. 13 is an exploded view of a compression device of the electric compressor of FIG. 1A.
FIG. 14A is a first perspective view of a drive shaft of FIG. 12.
FIG. 14B is a second perspective view of the drive shaft of FIG. 14A.
FIG. 15A is a first perspective view of a rotor and counterweights of the motor of FIG. 12.
FIG. 15B is a second perspective view of the rotor and counterweights of FIG. 15A.
FIG. 16A is a first perspective view of a portion of the electric compressor of FIG. 1, including an orbiting scroll, drive pin and swing-link mechanism.
FIG. 16B is a second perspective view of the portion of the electric compressor of FIG. 16A.
FIG. 16C is a perspective view of a plug of the compression device of FIG. 13.
FIG. 16D is a second perspective view of the plug of FIG. 16C.
FIG. 16E is a cross-sectional view of the plug of FIG. 16C.
FIG. 16F is a perspective view of an inverter housing of the inverter of FIG. 11.
FIG. 16G is a partial expanded view of the compression device of FIG. 13.
FIGS. 17A-17J are graphic representations of a fixed scroll and an orbiting scroll of a compression device of the electric compressor of FIG. 1, according to an embodiment of the present invention.
FIG. 18A is a first perspective view of a portion of the compression device of FIG. 13, including a fixed scroll and an orbiting scroll.
FIG. 18B is a second perspective view of the portion of the compression device of FIG. 18A.
FIG. 18C is a first perspective view of the fixed scroll of the compression device of FIG. 13.
FIG. 18D is a second perspective view of the fixed scroll of the compression device of FIG. 13.
FIG. 18E is a third perspective view of the fixed scroll of the compression device of FIG. 13.
FIG. 18F is a perspective view of a reed mechanism associated with the compression device of FIG. 13.
FIG. 18G is a cross-sectional view of the fixed scroll of the compression device of FIG. 13.
FIG. 19A is a first perspective view of a front cover of an electric compressor forming an oil separator, according to an embodiment of the present invention.
FIG. 19B is a second perspective view of the front cover of FIG. 19A.
FIG. 19C is a cross-sectional view of the front cover of FIG. 19A.
FIG. 20A is a partial view of an electric compressor with a cutaway view of the housing and an isolation and constraint system, according to an embodiment of the present invention.
FIG. 20B is a partial view of an isolation and constraint system for use with an electric compressor, according to another embodiment of the present invention.
FIG. 20C is a first perspective view of a thrust body, according to an embodiment of the present invention.
FIG. 20D is a second perspective view of the thrust body of FIG. 20C.
FIGS. 21A-21A are illustrations of a prior art compressor illustrating distortions in an outer diameter of a stator of a motor of the compressor.
FIG. 22A is a cross-sectional view of a compressor having a housing and a motor with a plurality of clamping mechanisms spaced about the outer diameter of the motor, according to an embodiment of the present invention.
FIG. 22B is an enlarged portion of the cross-section view of FIG. 22A.
FIG. 22C is a perspective view of the housing of the compressor of FIG. 22A.
FIG. 22D is a perspective view of the motor of the compressor of FIG. 22A.
FIG. 22E is a top view of the motor of the compressor of FIG. 22A.

### DETAILED DESCRIPTION OF THE INVENTION

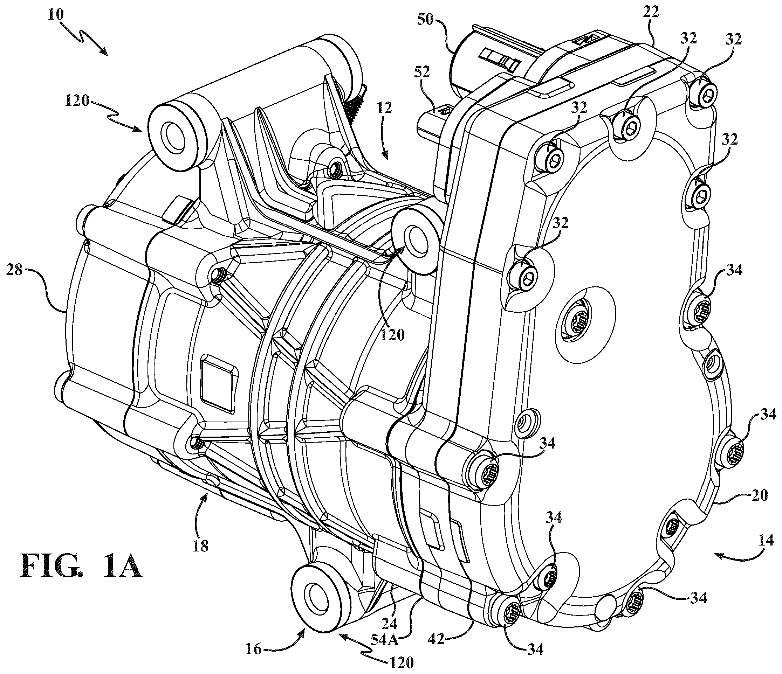

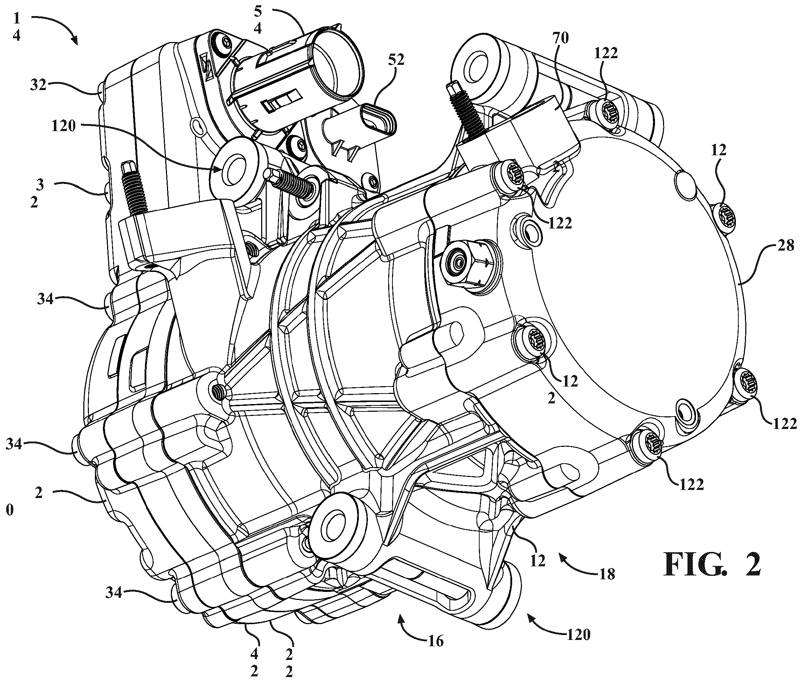

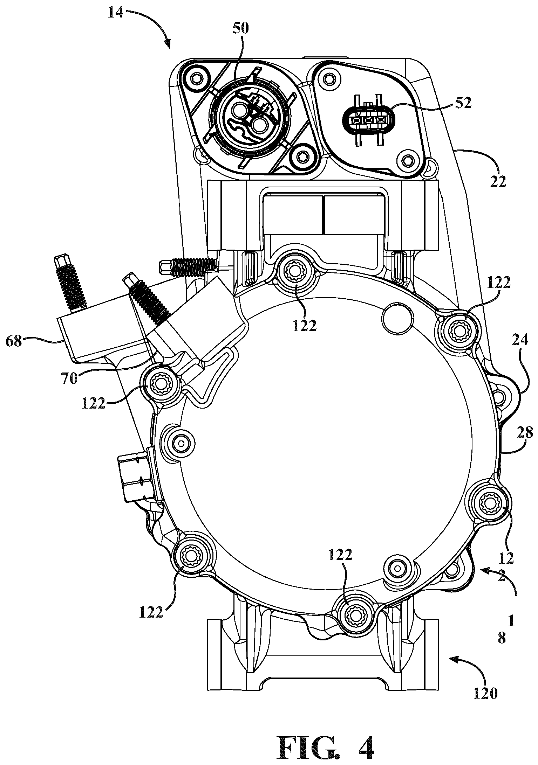

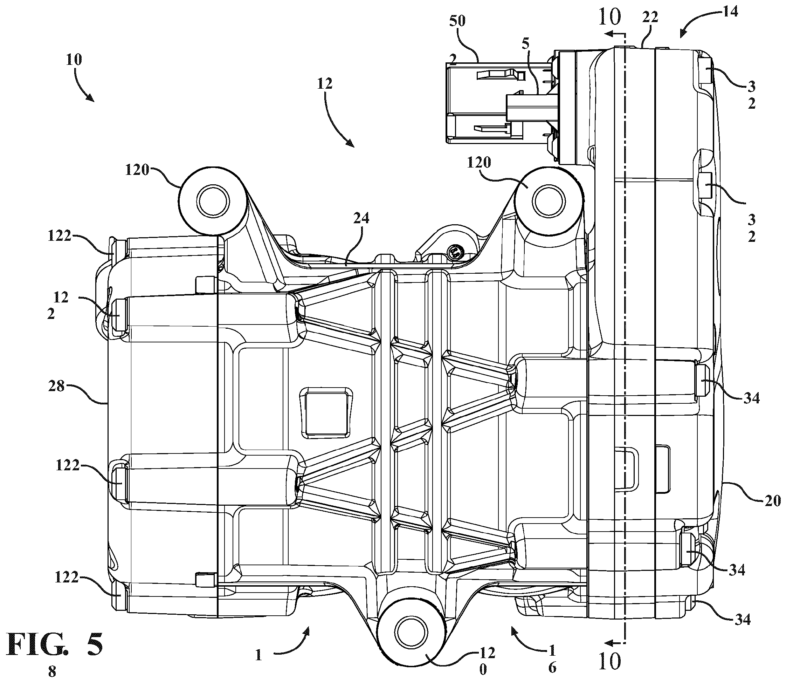

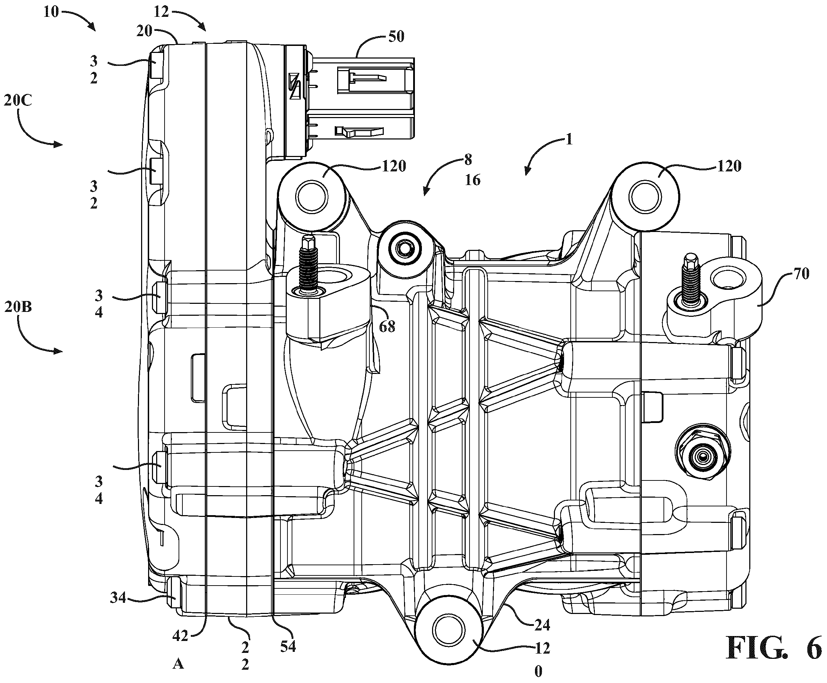

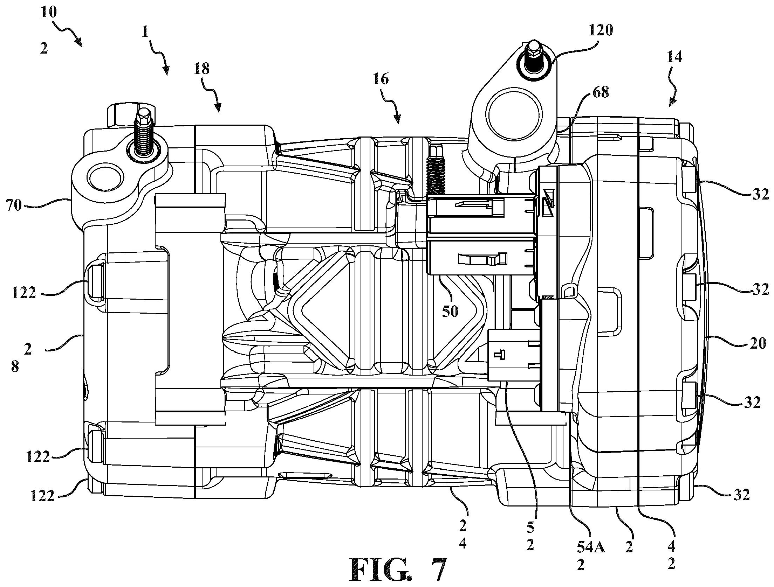

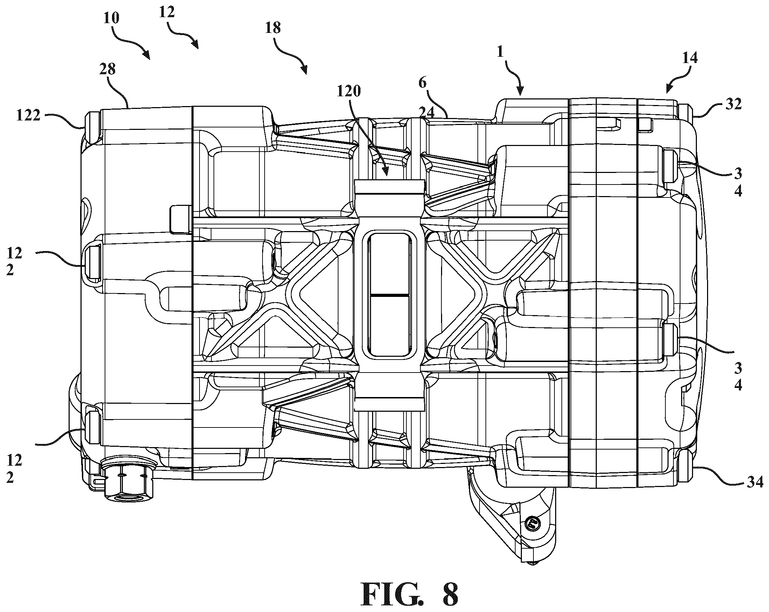

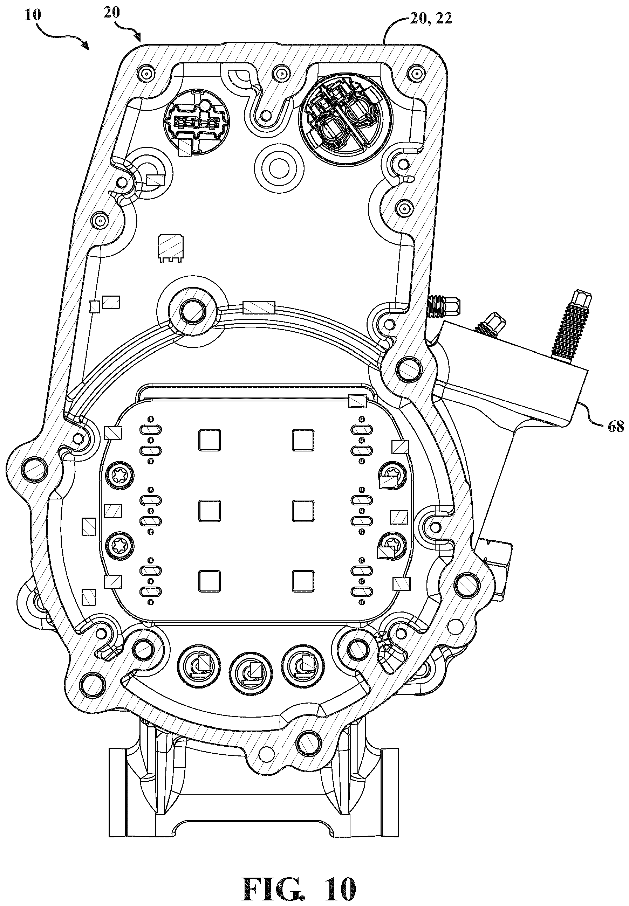

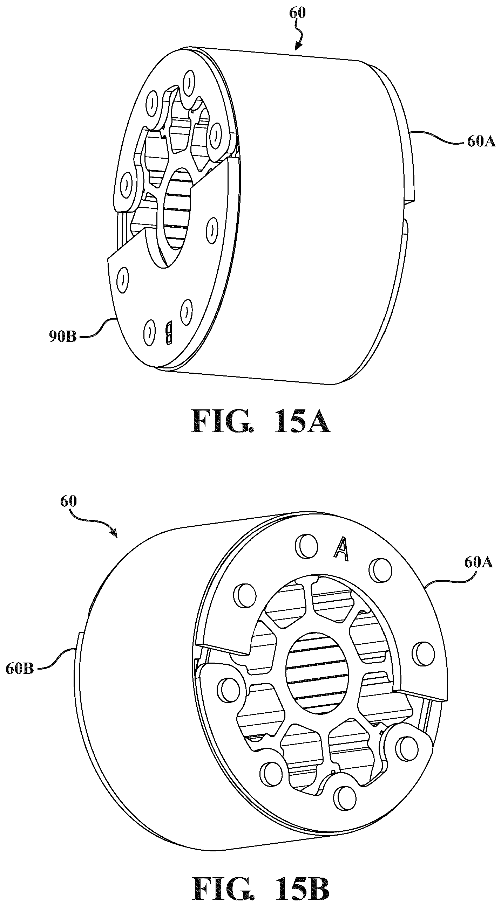

Referring to the FIGS. 1A-20D, wherein like numerals indicate like or corresponding parts throughout the several views, an electric compressor **10** having an outer housing **12** is provided. The electric compressor **10** is particularly suitable in a motor vehicle, such as an automotive vehicle (not shown). The electric compressor **10** may be used as a cooling device or as a heating pump (in reverse) to heat and/or cool different aspects of the vehicle. For instance, the electric compressor **10** may be used as part of the heating, ventilation and air conditioning (HVAC) system in electric vehicles (not shown) to cool or heat a passenger compartment. In addition, the electric compressor **10** may be used to heat or cool the passenger compartment, on-board electronics and/or a battery used for powering the vehicle while the vehicle is not being operated, for instance, during a charging cycle. The electric compressor **10** may further be used while the vehicle is not being operated and while the battery is not being charged to maintain, or minimize the degradation, of the life of the battery. In the illustrated embodiment, the electric compressor **10** has a capacity of 36 cubic centimeters (cc). The capacity refers to the initial volume captured within the compression device as the scrolls of the compression device initially close or make contact (see below). It should be noted that the electric compressor **10** disclosed herein is not limited to any such volume and may be sized or scaled to meet particular required specifications.

In the illustrated embodiment, the electric compressor **10** is a scroll-type compressor acts to compress a refrigerant rapidly and efficiently for use in different systems of a motor vehicle, for example, an electric or a hybrid vehicle. The electric compressor includes **10** an inverter section **14,** a motor section **16,** and a compression device (or compression assembly) **18** contained within the outer housing **12.** The outer housing **12** includes an inverter back cover **20,** an inverter housing **22,** a center housing **24,** and a front cover **28** (which may be referred to as the discharge head). The center housing **24** houses the motor section **16** and the compression device **28.**

In one aspect of the present invention, the electric compressor **10** includes a plurality of clamping mechanisms **170** spaced about the outer diameter of the motor section **16** configured to constrain the motor section **16** within the outer housing **12** (see below).

The inverter back cover **20,** the inverter housing **22,** the center housing **24,** and the front cover **28** may be composed from machined aluminum. The inverter **10** may be mounted, for example, within the body of a motor vehicle, via a plurality of mount points **120.**

### General Arrangement, and Operation, of the Electric Compressor 10

The inverter back cover **20** and the inverter housing **22** form an inverter cavity **30.** The inverter back cover **20** is mounted to the inverter housing **22** by a plurality of bolts **32.** The inverter back cover **20** and the inverter housing **22** are mounted to the center housing **24** by a plurality of bolts **34** which extend through apertures **36** in the inverter back cover **20** and apertures **38** in the inverter housing **22** and are threaded into threaded apertures **40** in the center housing **24.** An inverter gasket **42,** positioned between the inverter back cover **20** and the inverter housing **22** keeps moisture, dust, and other contaminants from the internal cavity **30.** A motor gasket **54B** is positioned between the inverter housing **22** and the center housing **24** to provide and maintain a refrigerant seal to the environment.

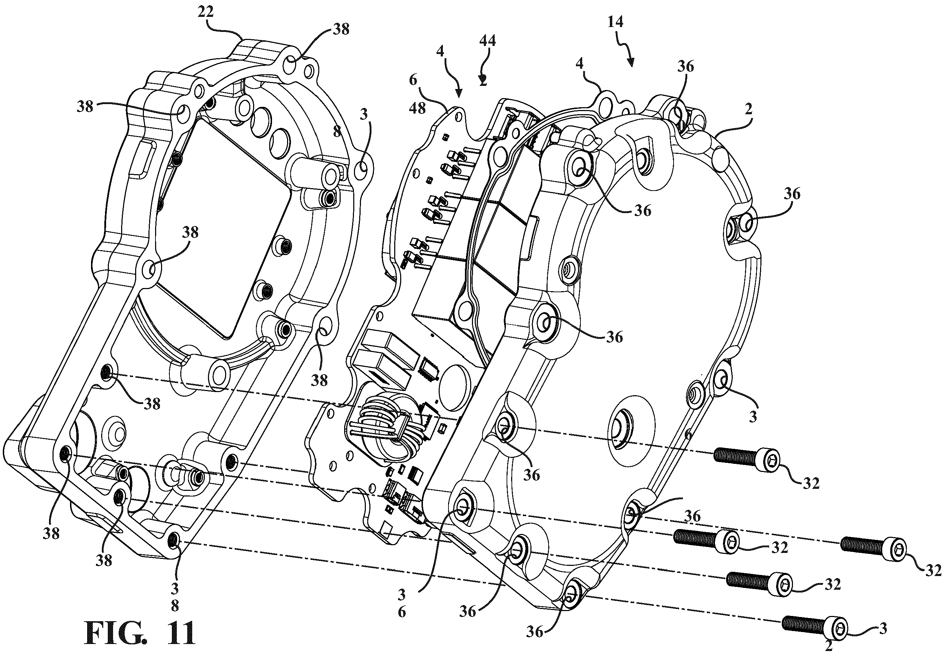

With reference to FIG. 11, an inverter module **44** mounted within the inverter cavity **30** formed by the inverter back cover **20** and the inverter housing **22.** The inverter module **44** includes an inverter circuit **46** mounted on a printed circuit board **48,** which is mounted to the inverter housing **22.** The inverter circuit **46** converts direct current (DC) electrical power received from outside of the electric compressor **10** into three-phase alternating current (AC) power to supply/power the motor **54** (see below). The inverter circuit **46** also controls the rotational speed of the electric compressor **10.** High voltage DC current is supplied to the inverter circuit **46** via a high voltage connector **50.** Low voltage DC current to drive the inverter circuit **46,** as well as control signals to control operation of the inverter circuit **46,** and the motor section **16,** is supplied via a low voltage connecter **52.**

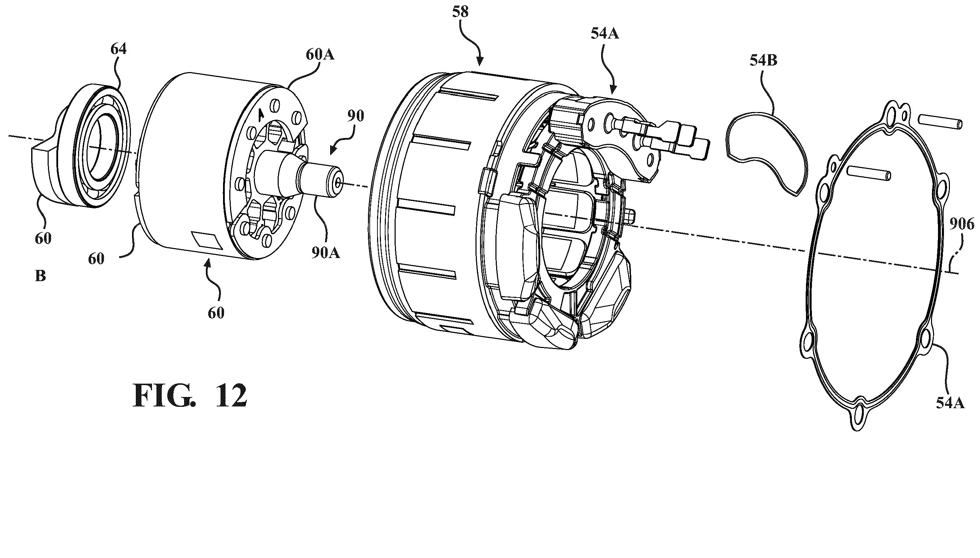

The center housing **24** forms a motor cavity **56.** The motor section **16** includes a motor **54** located within the motor cavity **56.** The motor cavity **56** is formed by a motor side **22A** of the inverter housing **22** and an inside surface **24A** of the center housing **22.** With specific reference to FIG. 12, the motor **54** is a three-phase AC motor having a stator **60.** The stator 60 has a generally hollow cylindrical shape with six individual coils (two for each phase). The stator 60 is contained within, and mounted to, the motor housing **22** and remains stationary relative to the motor housing **22.**

The motor **54** includes a rotor **60** located within, and centered relative to, the stator **58.** The rotor **60** has a generally hollow cylindrical shape and is located within the stator **60.** The rotor **60** has a number of balancing counterweights **60A, 60B,** affixed thereto. The balancing counterweights balance the motor **54** as the motor **54** drives the compression device **18** and may be machined from brass.

Power is supplied to the motor **54** via a set of terminals **54A** which are sealed from the motor cavity **56** by an O-ring **54B.**

A drive shaft **90** is coupled to the rotor **60** and rotates therewith. In the illustrated embodiment, the draft shaft **90** is press-fit within a center aperture **60C** of the rotor **60.** The drive shaft **90** has a first end **90A** and a second end **90B.** The inverter housing **22** includes a first drive shaft supporting member **22B** located on the motor side of the inverter housing **22.** A first ball bearing **62** located within an aperture formed by the first drive shaft supporting member **22** supports and allows the first end of the drive shaft 90 to rotate. The center housing **24** includes a second drive shaft supporting member **24A.** A second ball bearing **64** located within an aperture formed by the second drive shaft supporting member **24A** allows the second end **90B** of the drive shaft **90** to rotate. In the illustrated embodiment, the first and second ball bearing **62**, **64** are press-fit with the apertures formed by the first drive shaft supporting member **22** of the inverter housing **22** and the second drive shaft supporting member **24A** of the center housing **24**, respectively.

As stated above, the electric compressor **10** is a scroll-type compressor. The compression device **18** includes the fixed scroll **26** and an orbiting scroll **66.** The orbiting scroll **66** is fixed to the second end of the rotor **60B.** The rotor **60** with the drive shaft **90** rotate to drive the orbiting scroll **66** motion under control of the inverter module **44** rotate.

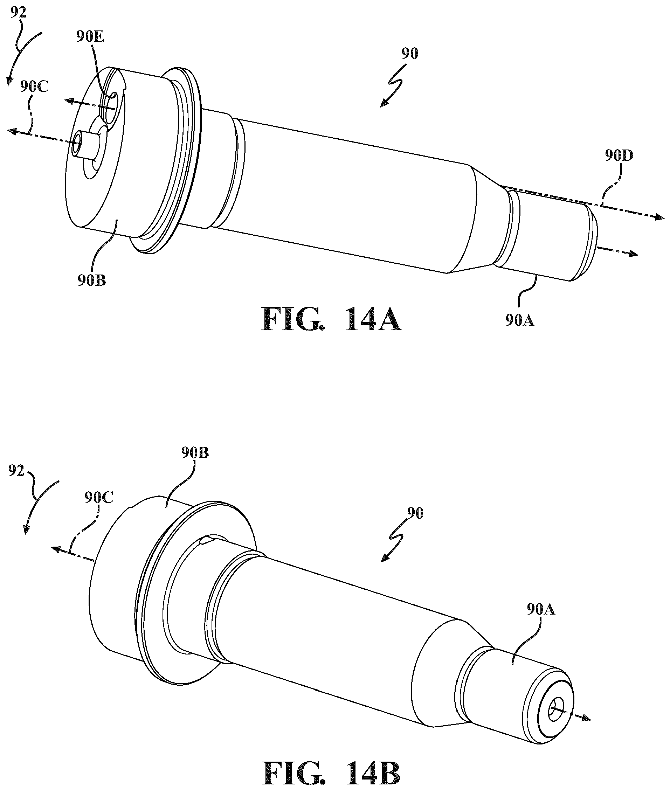

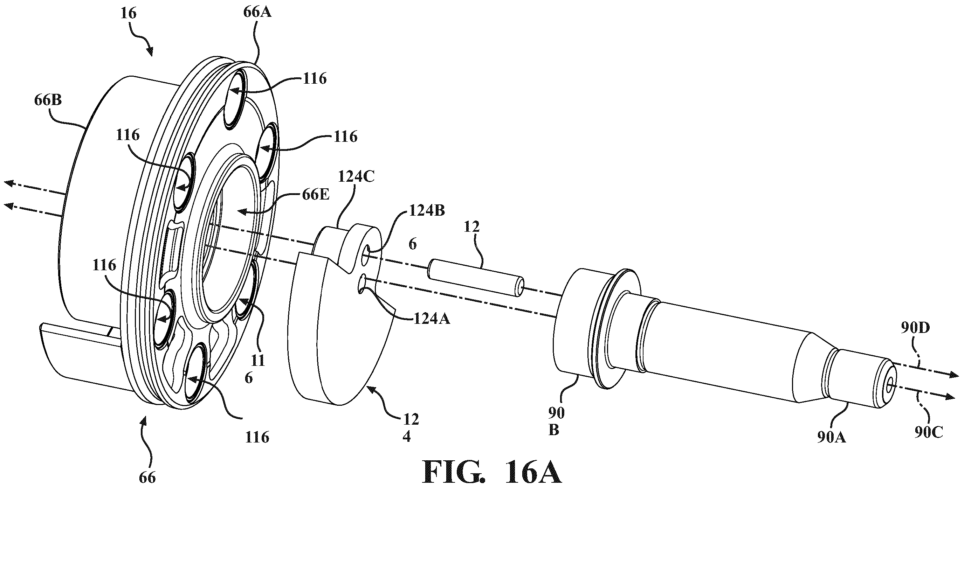

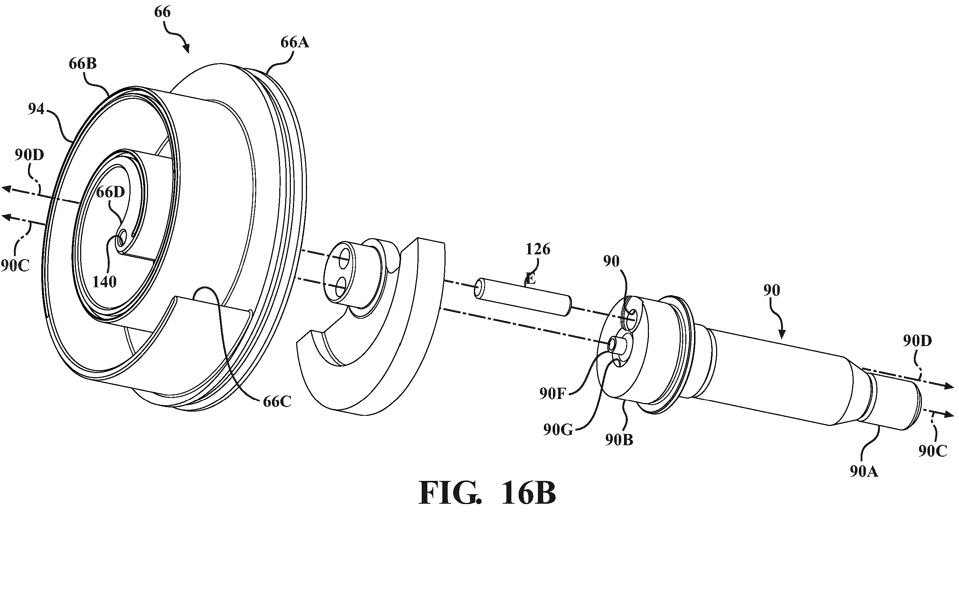

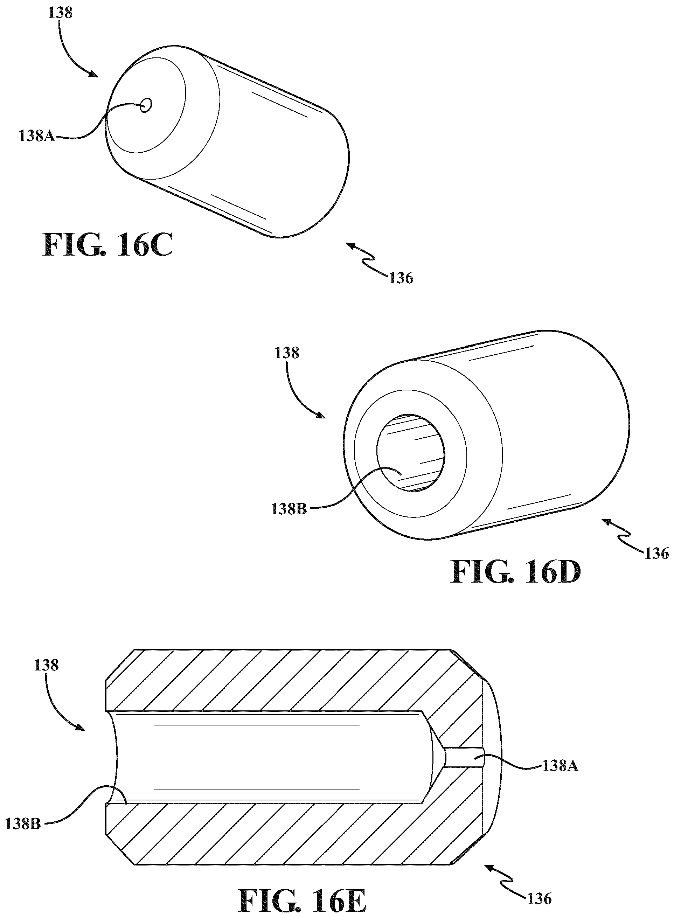

With reference to FIGS. 14A, 14B, 16A and 16B, the drive shaft **90** has a central axis **90C** around which the rotor **60** and the drive shaft **90** are rotated. The orbiting scroll **66** moves about the central axis **90C** in an eccentric orbit, i.e., in a circular motion while the orientation of the orbiting scroll **66** remains constant with respect to the fixed scroll **26.** The center of the orbiting scroll **66** is located along an offset axis **90D** of the drive shaft **90** defined by an orbiting scroll aperture (or drive pin location) **90E** (see FIG. 14A) located at the second end **90D** of the drive shaft **90.** As the drive shaft **90** is rotated by the motor **54**, the orbiting scroll **66** follows the motion of the orbiting scroll aperture **90E** through the drive pin **126** and the drive hub of the swinglink mechanism **124** and bearing **108** as the drive shaft **90** is rotated about the central axis **60C.**

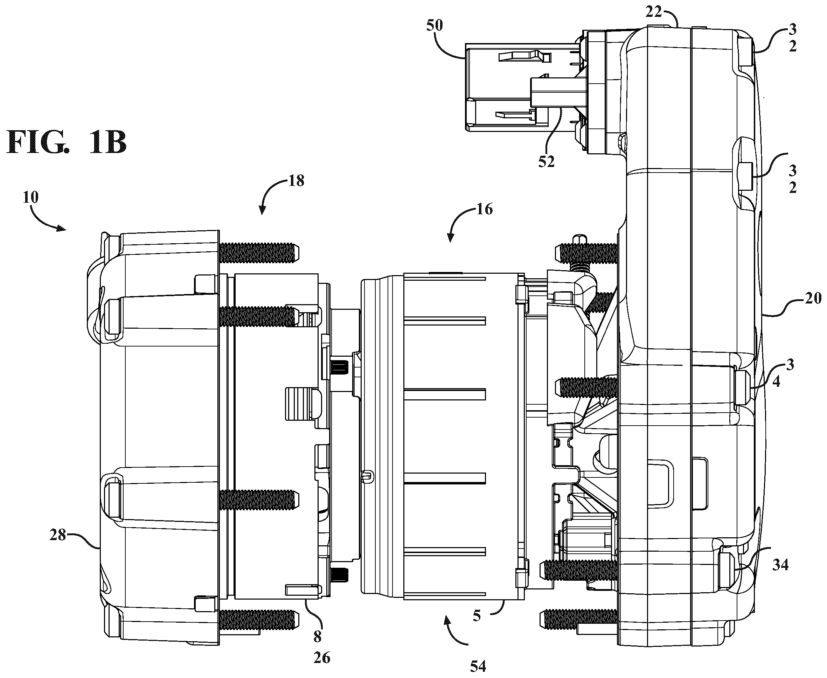

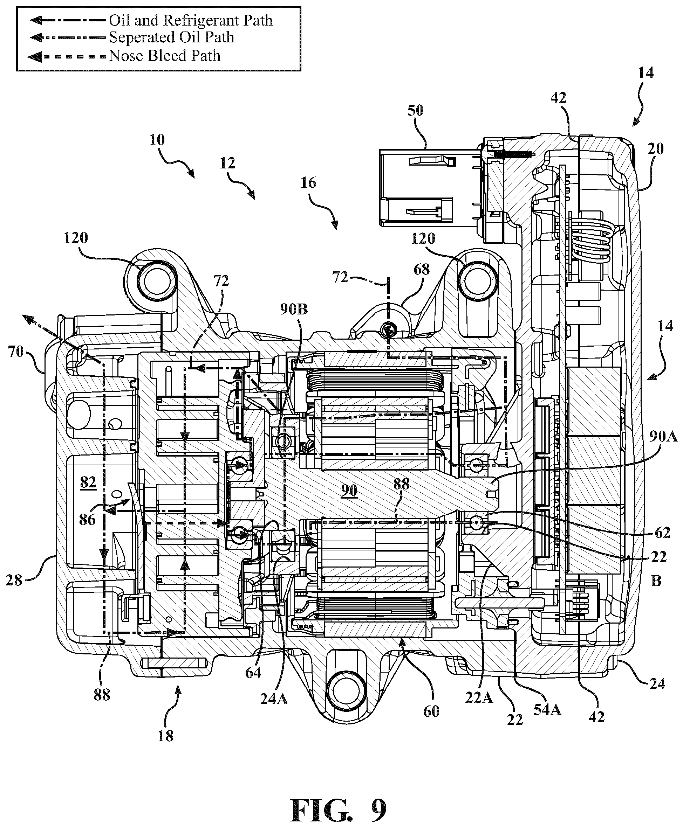

With specific reference to FIGS. 1, 2 and 9, intermixed refrigerant and oil (at low pressure) enters the electric compressor **10** via a refrigerant inlet port **68** and exits the electric compressor **10** (at high pressure) via refrigerant outlet port **70** after being compressed by the compression device **18.** As shown in the cross-sectional view of FIG. 9, the refrigerant follows the refrigerant path **72** through the electric compressor **10.** As shown, refrigerant enters the refrigerant inlet port **68** and enters an intake volume **74** formed between the motor side **22A** of the inverter housing **22** and the center housing **24** adjacent the refrigerant inlet port **68.** Refrigerant is then drawn through the motor section **16** and enters a compression intake volume **76** formed between an internal wall of the fixed scroll **26** and the orbiting scroll **66** (demonstrated by arrow **92** in FIG. 14A).

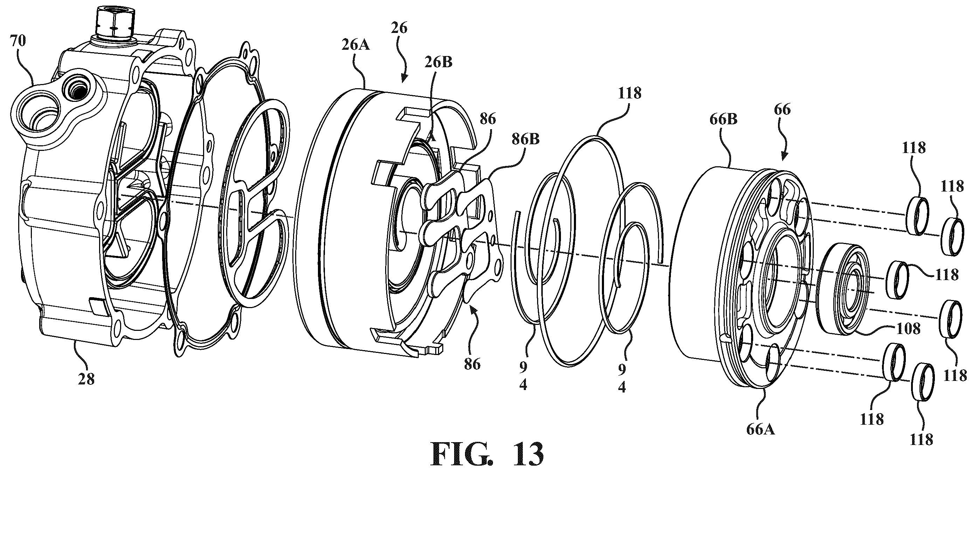

The fixed scroll **26** is mounted within the center housing **24.** As shown in FIGS. 9 and 13, the fixed scroll **26** has a fixed scroll base **26A** and a fixed scroll lap **26B** extending away from the fixed scroll base **26A** towards the orbiting scroll **66.** As shown in FIGS. 16A-16B, the orbiting scroll **66** has an orbiting scroll base **66A** and an orbiting scroll lap **66B** extending from the orbiting scroll base **66A** towards the fixed scroll **26.** The laps **26A**, **66A** have a tail end **26C**, **66C** adjacent an outer edge of the respective scroll **26A**, **66B** and scroll inward towards a respective center end **26D**, **66D.**

Respective tip seals **94** are located within a slot **26E**, **66E** located at a top surface of the fixed scroll **26** and the orbiting scroll **66**, respectively. The tip seals **94** are comprised of a flexible material, such as a Polyphenylene Sulfide (PPS) plastic. When assembled, the tip seals **94** are pressed against the opposite base **26A 66A** to provide a seal therebetween. In one embodiment, the slots **26E 66E**, are longer than the length of the tip seals **94** to provide room for adjustment/movement along the length of the tip seals **94.**

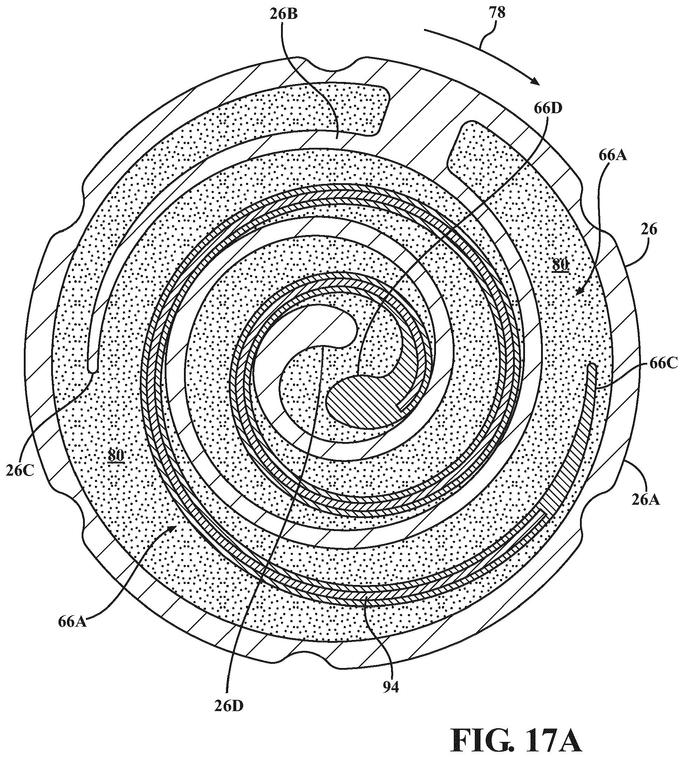

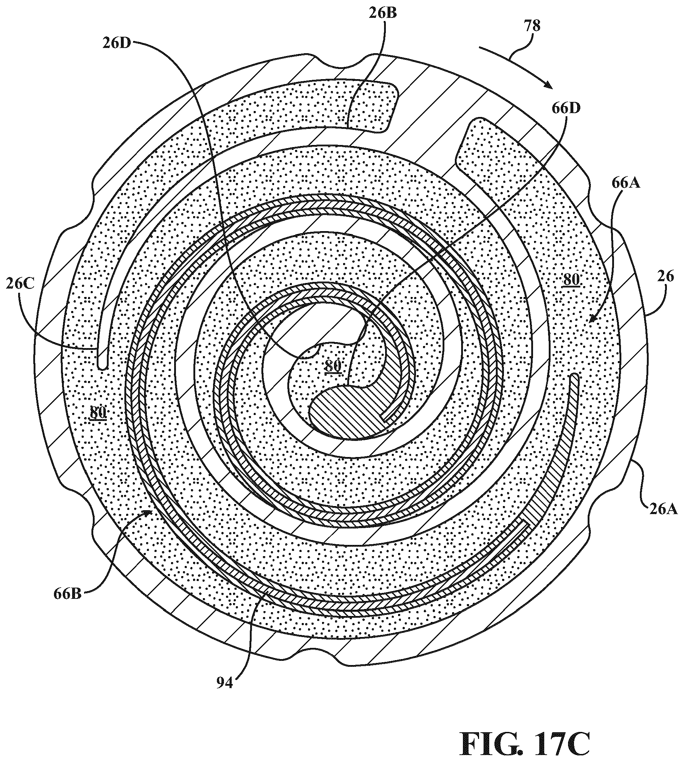

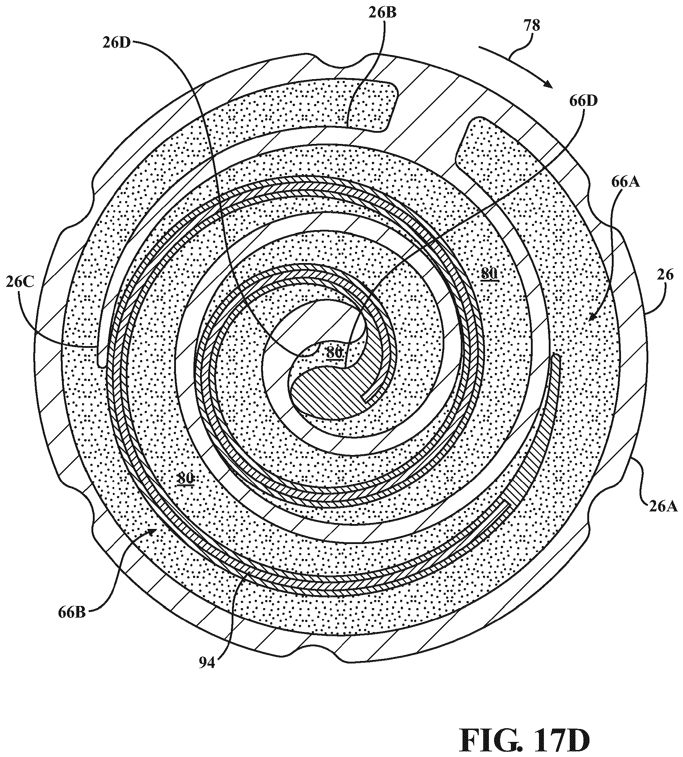

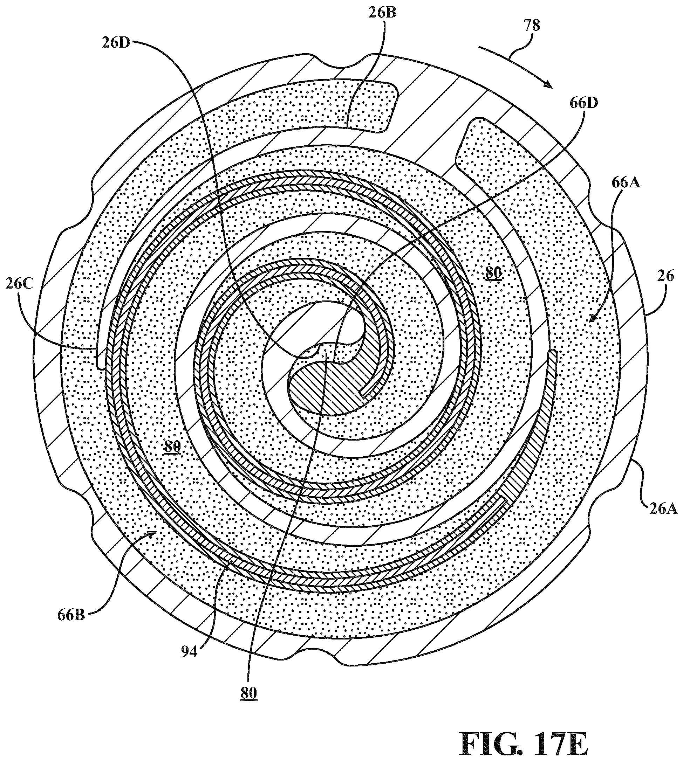

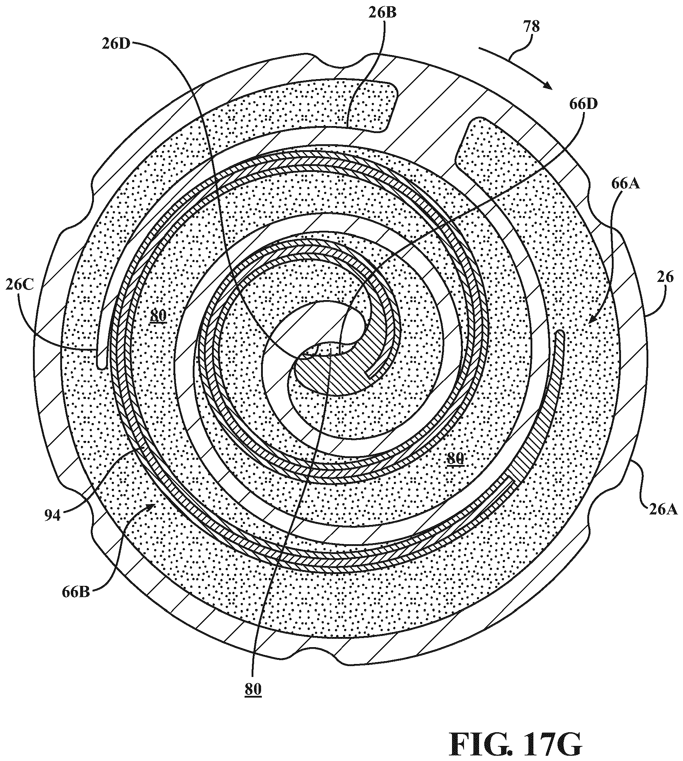

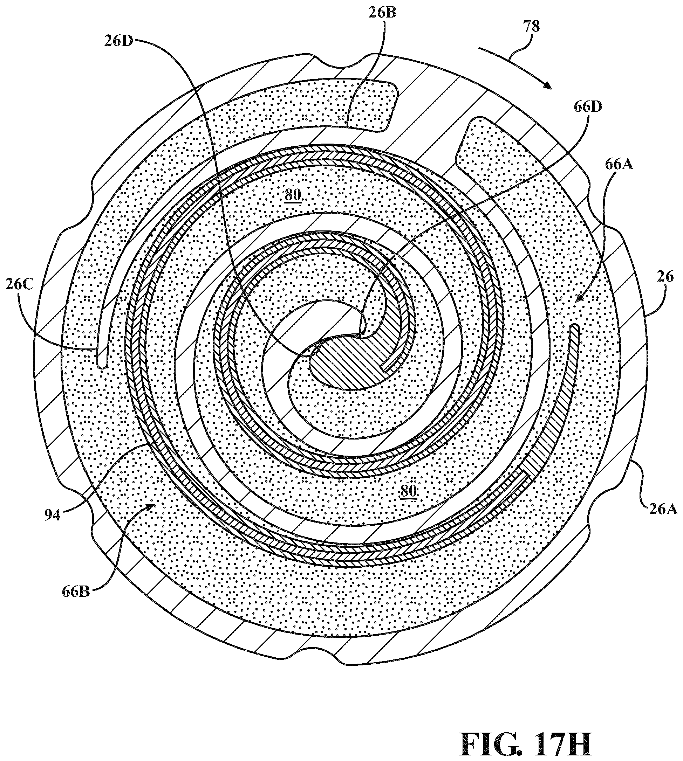

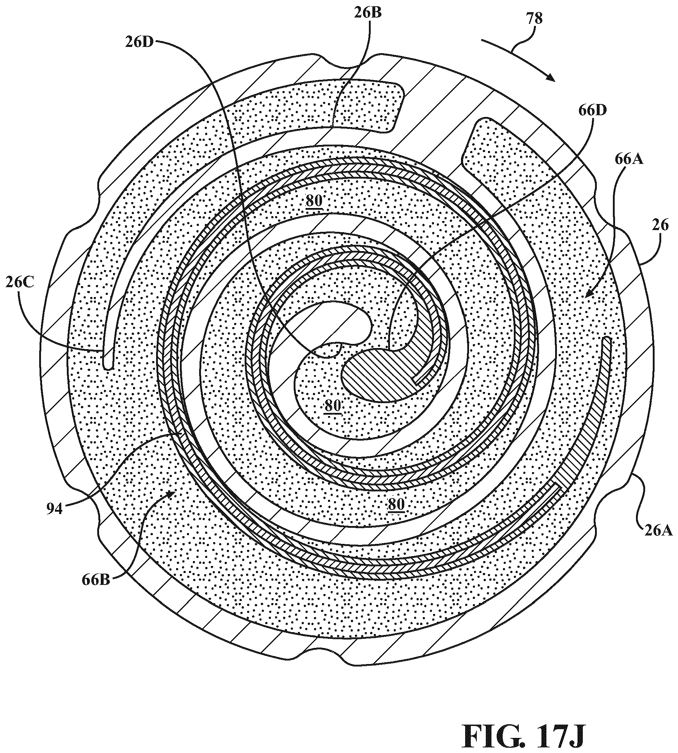

With reference to FIGS. 17A-17I, refrigerant enters the compression device **12** from the compression intake volume **76.** In FIGS. 17A-17I, a cross-section view of the fixed scroll **26** shown and the top of the orbiting scroll **66** are shown.

As discussed in detail below, the fixed scroll lap **26A** and the orbiting scroll lap **66A** form compression chambers **80** in which low or unpressurized (saturation pressure) refrigerant enters from the compression device **12.** As the orbiting scroll **66** moves to enable the compression chambers **80** to be closed off and the volume of the compression chambers **80** is reduced to pressurize the refrigerant. At any one time during the cycle, one or more compression chambers **80** are at different stages in the compression cycle. The below description relates just to one set of compression chambers **80** during a complete cycle of the electric compressor **10.**

The refrigerant enters the compression chambers **80** formed between the orbiting scroll lap **66A** and the fixed scroll lap **26A.** During a cycle of the compressor **10**, the refrigerant is transported towards the center of these chambers. The orbiting scroll **66** orbits in a circular motion indicated by arrow **78** formed by the relative position of the orbiting scroll **66** relative to the fixed scroll **26** is shown during one cycle of the electric compressor **10.**

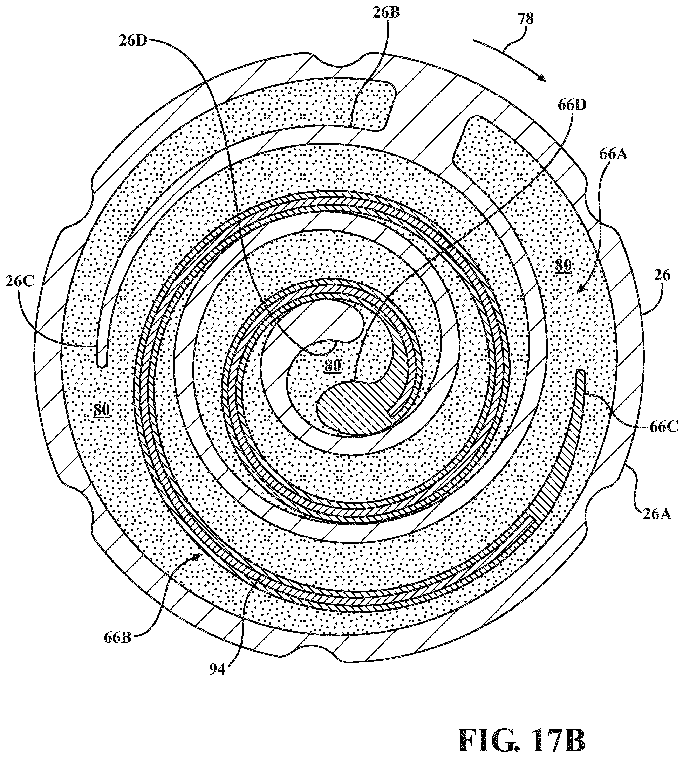

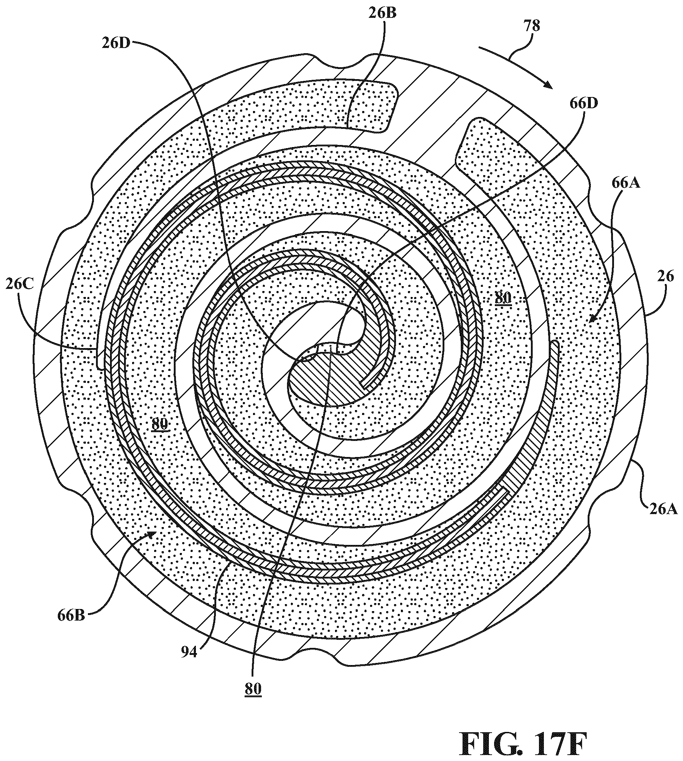

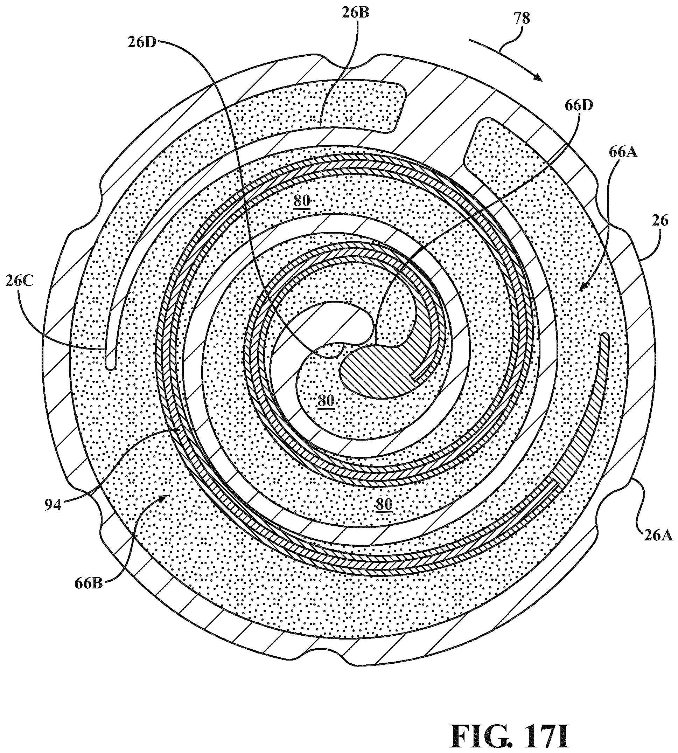

In FIG. 17A, the position of the orbiting scroll **66** at the beginning of a cycle is shown. As shown, in this initial position, the tail ends **16B**, **66B** are spaced apart from the other scroll lap **66B 16B.** At this point, the compression chambers **80** are open to the compression intake volume **76** allowing refrigerant under low pressure to fill the compression chambers **80** from the compression intake volume **76.** As the orbiting scroll **66** moves along path **78**, the space between the tail ends **16A**, **66A** and the other scroll **66**, **16** decreases until the compression chambers **80** are closed off from the compression intake volume **76** (FIGS. 17B-17E). As the orbiting scroll **66** continues to move along **78**, the volume of the compression chambers **80** is further reduced, thus pressurizing the refrigerant in both compression chambers **80** (FIGS. 17F-H). As shown in FIGS. 17I-18J, as the orbiting scroll 66 continues to orbit, the two compression chambers **80** are combined into a single volume. This volume is further reduced until the pressurized refrigerant is expelled from the compression device **18** (see below)

As discussed below, the refrigerant enters chambers formed between the walls of the orbiting scroll 66 and the fixed scroll **26.** During the cycle of the compressor **10**, the refrigerant is transported towards the center of these chambers. The orbiting scroll **66** orbits or moves in a circular motion indicated by arrow **78** formed by the relative position of the orbiting scroll **66** relative to the fixed scroll **26** is shown during one cycle of the electric compressor **10.**

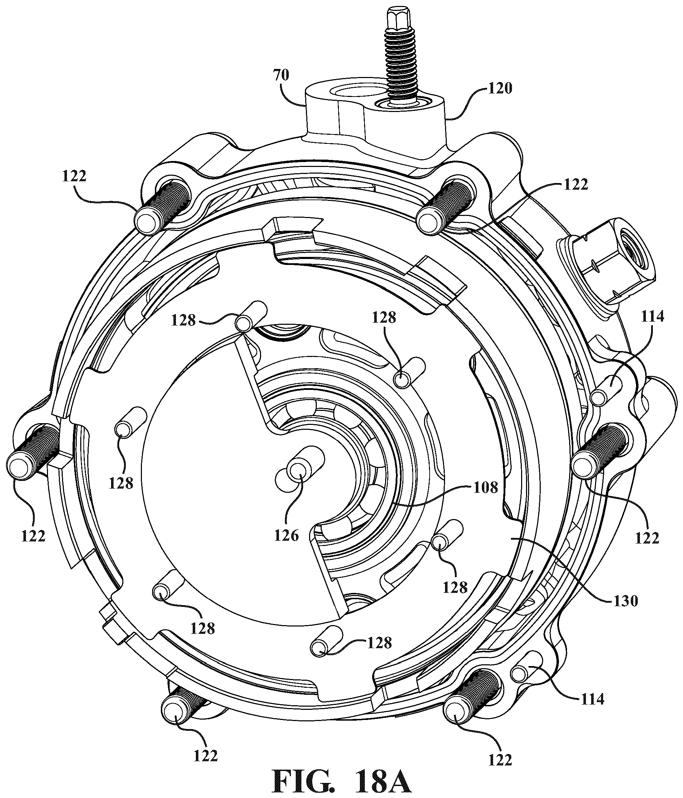

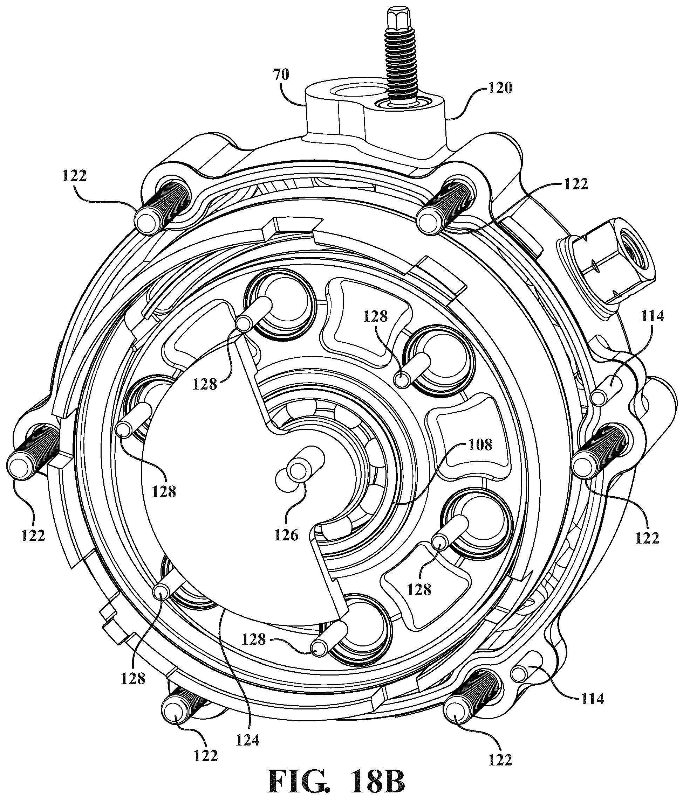

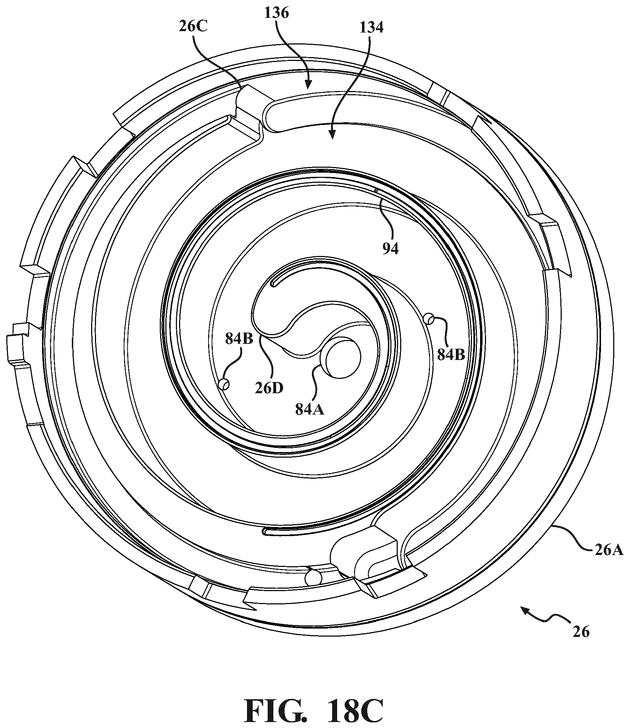

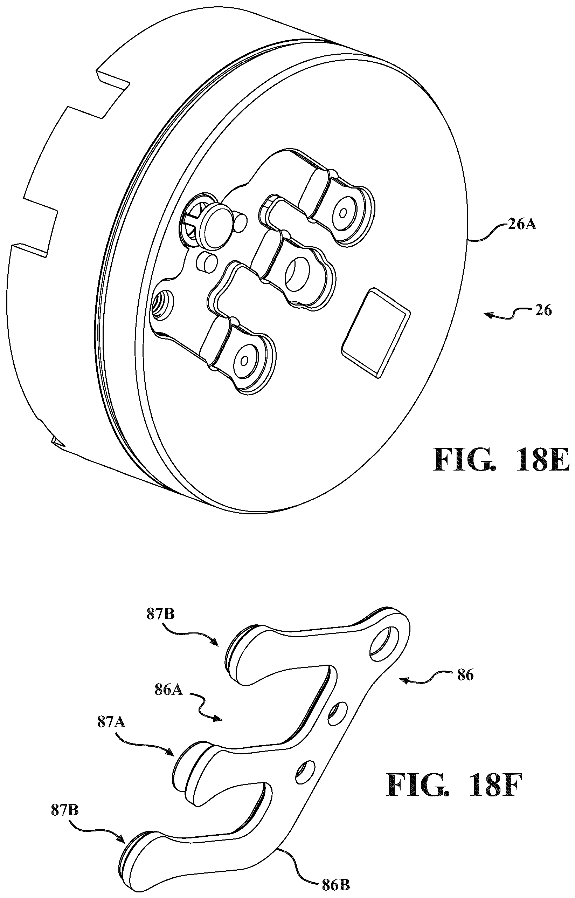

Returning to FIG. 1, the front cover **28** forms a discharge volume **82.** The discharge volume **82** is in communication with the refrigerant output port **70.** As discussed in more detail below, pressurized refrigerant leaves the compression device **18** through a central orifice **84A** and two side orifices **84B** in the fixed scroll **26** (see FIGS. 18C and 18E) The release of pressurized refrigerant is controlled by a reed mechanism **86.** In the illustrated embodiment, the reed mechanism **86** includes three reeds: a central reed **87A** and two side reeds **87B** corresponding to the central orifice **84A** and the two side orifices **84B** (see below).

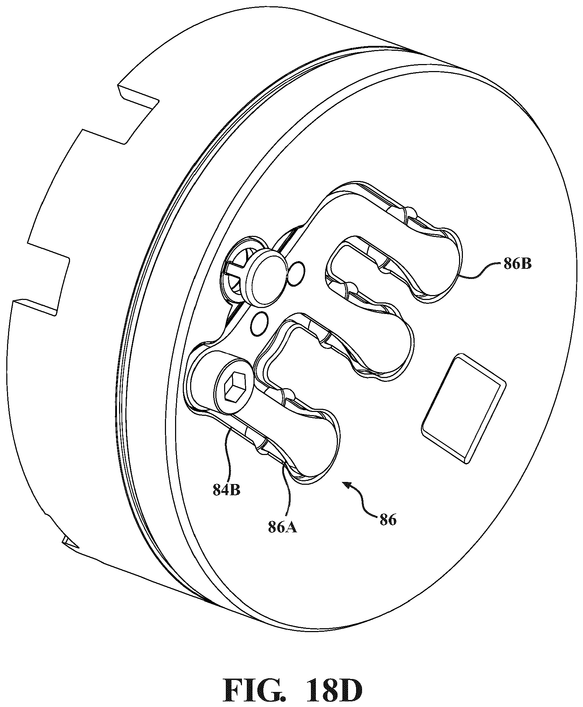

As shown in FIGS. 18D and 18E, in the illustrated embodiment, the reed mechanism **86** includes a discharge reed **86A** and a reed retainer **86B.** The discharge reed **86A** is made from a flexible material, such as steel. The characteristics, such as material and strength, are selected to control the pressure at which the pressurized refrigerant is released from the compression device **18.** The reed retainer **86B** is made from a rigid, inflexible material such as stamped steel. The reed retainer **86** controls or limits the maximum displacement of the discharge reed **86A** relative to the fixed scroll **26.** Generally, oil is directed rearward through the motor section **16**, providing lubrication and cooling to the rotating components of the electric compressor **10**, such as the rotor **60**, the drive shaft **90** and all beatings **62**, **64**, **108.** Oil is drawn upward towards the top of the motor **54** by the rotation of the rotor **60.** From there, oil enters the interior of the motor **54** to lubricate the second ball bearing **64** and the oil by the rotational forces within the motor section **16** may impact against the motor side **22A** of the inverter housing **22.** The oil is further directed by the motor side **22A** into the ball bearing **62**, further discussed below

In the illustrated embodiment, the read mechanism **86** is held or fixed in place via a separate fastener **89.** As shown in FIGS. 18E and 18F, the reed mechanism **86** incudes a plurality of apertures **86C** which are configured to receive associated posts **83A** on the fixed scroll **26.** As shown in FIG. 18E, the back surface of the fixed scroll **26** includes a bezel **83B** surrounding the orifices **84** which assists in tuning the pressure at which refrigerant exits the compression device **18.** Additionally, a debris collection slot **83C** collects debris near the orifices **84A**, **84B** to prevent from interference with the reed mechanism **86.**

As shown in FIG. 9, the path of refrigerant through the electric compressor is indicated by dashed arrow **72.**

The electric compressor **10** utilizes oil (not shown) to provide lubrication to the between the components of the compression device **18** and the motor **54**, for example, between the orbiting scroll **66** and the fixed scroll **26** and within the ball bearings **62**, **64.** The oil intermixes with the refrigerant within the compression device **18** and the motor **54** and exits the compression device **18** via the orifice **84.** As discussed in more detail below, the oil is separated from the compressed refrigerant within the front cover **28** and is returned to the compression device **18.**

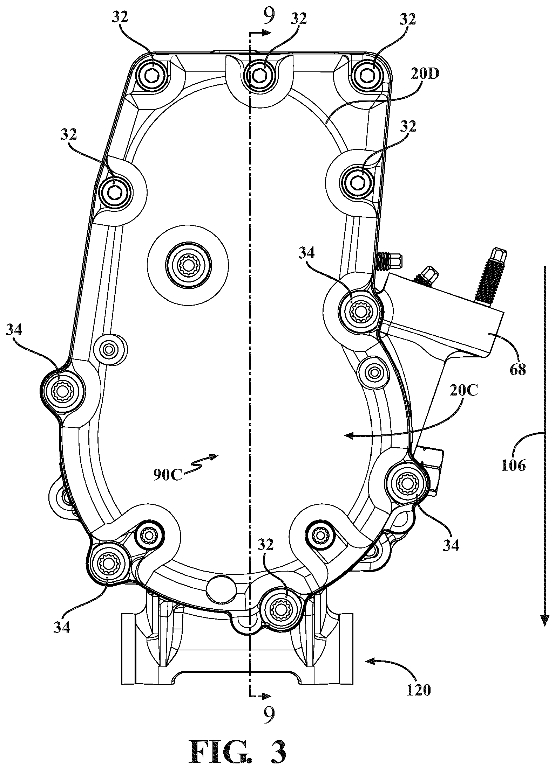

An oil separator **96** facilitates the separation of the intermixed oil and refrigerant. In the illustrated embodiment, the oil separator **96** is integrated within the front cover **28.** The front cover **28** further defines an oil reservoir **98** which collects oil from the oil separator **96** before the oil is recirculated through the motor **54** and motor cavity **56** and the compression device **18.** In use, the electric compressor **10** is generally orientated as shown in FIGS. 3-5, such that gravity acts as indicated by arrow **106** and oil collects within the oil reservoir **98.**

With reference to FIG. 9, the general path oil travels from the bottom of the electric compressor **10** through the compression device **18**, out the orifice **84** to the discharge volume **82** of the front cover **28** and back to the compression device **18** is shown by arrow **88.**

In the illustrated embodiment, the front cover **28** is mounted to the center housing **24** by a plurality of bolts **122** inserted through respective apertures therein and threaded into apertures in the center housing **24.** A fixed head gasket **110** and a rear heard gasket **112**, are located between the center housing **24** and the fixed scroll **26** to provide sealing.

An oil separator **96** facilitates the separation of the intermixed oil and refrigerant. Generally, the oil separator 96 only removes some of the oil within the intermixed oil and refrigerant. The separator oil is stored in an oil reservoir and cycled back through the compression device **18**, where the oil is mixed back in with the refrigerant.

In the illustrated embodiment, the oil separator **96** is integrated within the front cover **28.** The front cover **28** further defines an oil reservoir **98** which collects oil from the oil separator **96** before the oil is recirculated through the motor **54** and motor cavity **56** and the compression device **18.** In use, the electric compressor **10** is generally orientated as shown in FIGS. 3-5, such that gravity acts as indicated by arrow **106** and oil collects within the oil reservoir **98.** With reference to FIG. 9, the general path oil travels from the bottom of the electric compressor **10** through the compression device **18**, out the orifice **84** to the discharge volume **82** of the front cover **28** and back to the compression device **18** is shown by arrow **88.** As shown, the oil is drawn back up into the compression device **18** where the oil mixed back into or with the refrigerant.

As stated above, refrigerant, which is actually a mixture of refrigerant and oil enters the electric compressor **10** via the refrigerant inlet port **70.** The intermix of oil and refrigerant is drawn into the motor section **16**, thereby providing lubrication and cooling to the rotating components of the electric compressor **10**, such as the rotor **60**, the drive shaft **90.Oil** and refrigerant enters the interior of the motor **54** to lubricate the second ball bearing **64** and the oil by the rotational forces within the motor section **16.** may impact against the motor side **22A** of the inverter housing **22.** The refrigerant and oil is further directed by the motor side **22A** into the ball bearing **62**, further discussed below.

### Swing-Link Mechanism and Concentric Protrusion of the Drive Shaft

With specific reference to FIGS. 13-18B, in a first aspect of the electric compressor **10** of the disclosure, an electric compressor **10** includes a swing link mechanism **124** and the drive shaft **90** has a concentric protrusion **126.** In one embodiment, the concentric protrusion **126** is integrally formed with the drive shaft **90.** As discussed below, the swing-link mechanism **124** is used to rotate the orbiting scroll **66** in an eccentric orbit about the drive shaft 90.

In the prior art, the drive shaft is coupled to a swing-link mechanism by a drive pin and a separate eccentric pin, both of which are pressing into the drive shaft. The drive pin is used to rotate the swing link mechanism **124** which moves the orbiting scroll **66** along its eccentric orbit. The drive pin and the eccentric pin are inserted into respective apertures in the end of the drive shaft. The eccentric pin is used to limit articulation of the orbiting scroll **66** is the orbiting scroll 66 travels along the eccentric orbit. Neither the drive pin, nor the eccentric pin, are located along the central axis of the drive shaft. As the drive shaft is rotated, the drive pin and the eccentric pin are placed under considerable stress. This, both pins are composed from a hardened material, such as SAE 52100 bearing steel. In addition, the eccentric pin may require an aluminum bushing or other slide bearing to prevent damage to the eccentric pin, as the eccentric pin is used to limit the radial movement of the eccentric orbit of the orbiting scroll 66. Also, the prior art eccentric pin requires additional machining on the face of the drive shaft 90, including precise apertures for the drive pin, and eccentric pin.

As discussed in more detail below, the eccentric pin of the prior art is replaced with a concentric protrusion **90F.**

In the illustrated embodiment, the scroll-type electric compressor **10** includes the housing **12**, the refrigerant inlet port **68**, the refrigerant outlet port **70**, the drive shaft **90**, the concentric protrusion **90F**, the motor **54**, the compression device **18**, the swing link mechanism **124**, a drive pin **126** and a ball bearing **108.** The housing **12** defines the intake volume **74** and the discharge volume **82.** The refrigerant inlet port **68** is coupled to the housing **12** and is configured to introduce the refrigerant to the intake volume **74.** The refrigerant outlet port **70** is coupled to the housing **12** and is configured to allow compressed refrigerant to exit the scroll-type electric compressor **10** from the discharge volume **82.** The drive shaft **90** is located within the housing **12** and has first and second ends **90A**, **90B.** The drive shaft **90** defines, and is centered upon, a center axis **90C.**

The concentric protrusion **90F** is located at the second end **90B** of the drive shaft **90** and is centered on the center axis **90C.** The concentric protrusion **90F** and extends away from the drive shaft **90** along the central axis **90C.** The concentric protrusion **90F** includes a drive pin aperture **90E.** The motor **54** is located within the housing **12** and is coupled to the drive shaft **90** to controllably rotate the drive shaft **90** about the center axis **90C.** The drive pin **126** is located within the drive pin aperture **90E** and extends away from the drive shaft **90.** The drive pin **126** is parallel to the concentric protrusion **90F.**

The concentric pin **90F** may further include an undercut **90G**, and the outer surface may be surface hardened or after treated with a coating or bearing surface. The concentric pin **90F** may be further machined simultaneously with the drive shaft **90.**

As explained above, the compression device **18** includes the fixed scroll **26** and the orbiting scroll 66. The fixed scroll **26** is located within, and being fixed relative to, the housing **12.** The orbiting scroll **66** is coupled to the drive shaft **90.** The orbiting scroll **66** and the fixed scroll **26** form compression chambers **80** (see above) for receiving the refrigerant from the intake volume **74** and for compressing the refrigerant as the drive shaft **90** is rotated about the center axis **90C.** The orbiting scroll **66** has an inner circumferential surface **66E.**

The swing-link mechanism **124** is coupled to the drive shaft **90** and has first and second apertures **124A**, **124B** for receiving the concentric protrusion **90F** and the drive pin **126.** The swing-link mechanism **124** further includes an outer circumferential surface **124C.**

The ball bearing **108** is positioned between, and adjacent to each of, the inner circumferential surface **66E** of the orbiting scroll **66** and the outer circumferential surface **124C** of the swing-link mechanism **124.** The drive shaft **90**, drive pin **126**, orbiting scroll **66** and swing-link mechanism **124** are arranged to cause the orbiting scroll **66** to rotate about the central axis **90C** in an eccentric orbit.

In one embodiment, the concentric protrusion **90F** is integrally formed with the drive shaft **90.** The drive shaft **90**, concentric protrusion **90F**, and swing-link mechanism **124** may be machined from steel. The concentric protrusion **90F** being formed simultaneously and within the same machining operation with the drive shaft **90** further increases manufacturing efficiencies.

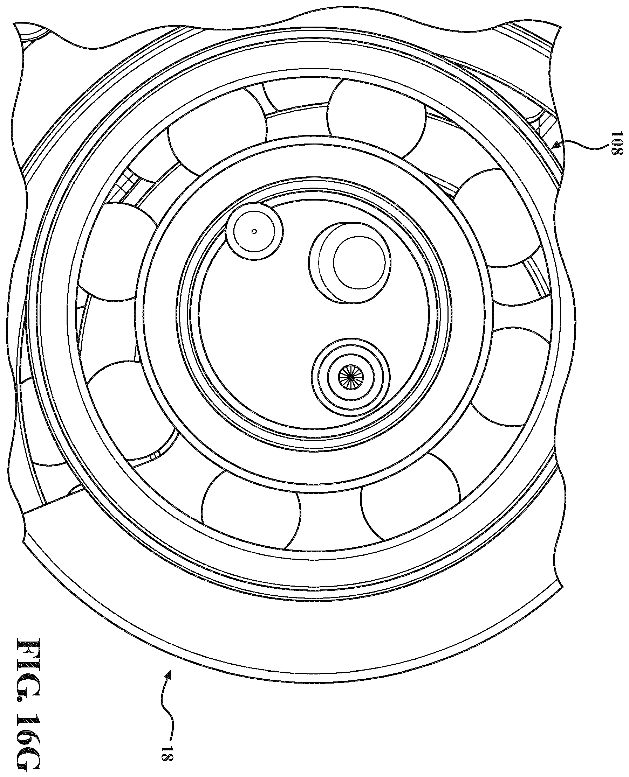

The expanded view of a portion of the compression device **18** illustrated in FIG. 16G, further illustrates the concentric protrusion **90F.** The concentric protrusion **90F** interacts and guides the swink-link mechanism **124.** The concentric protrusion **90F** is sized and machined with a controlled tolerance with the first aperture **124A** to create a controlled gap that limits the radial movement of the eccentric orbit of the orbiting scroll **66.** Unlike the prior art, the concentric protrusion **90F** does not require a second pin, or any additional machining operations. The concentric protrusion **90F** further co-operates with the guidance pins **128** and the slots **66G** on a lower surface **66F** of the orbiting scroll **66**, further discussed below.

The scroll-type electric compressor **10** includes an inverter section **14**, a motor section 16, and the compression device **18.** The motor section **16** includes a motor housing **54** that defines a motor cavity **56.** The compression section **18** includes the fixed scroll **26.** The housing **12** is formed, at least in part, the fixed scroll **26** and the center housing **24.**

With specific reference to 13, 16B, and 18A-18F in the illustrated embodiment, the orbiting scroll **66** has a lower surface **66F.** The lower surface **66F** has a plurality of ring-shaped slots **66G.** The center housing **24** includes a plurality of articulating guidance pin apertures **128.** The guidance pins **128** are located within the guidance pin apertures **66G** and extend towards the compression device **18** and into the ring-shaped slots **66G.** The guidance pins **128** are configured to limit articulation of the orbiting scroll **66** as the orbiting scroll **66** orbits about the central axis **90C.** In one embodiment, each of the ring-shaped slots **66G** includes a ring sleeve **118.** A thrust plate **130** is located between the fixed scroll **26** and a thrust body **150** (see below) and provides a wear surface therebetween.

### Discharge Head Design having a Three-Reed Reed Mechanism and an Oil Separator

In the illustrated embodiment, the electric compressor **10** includes a multicavity pulsation muffler system **160** and an oil separator **96** which may be located in the discharge volume **82** and integrally formed with the discharge head or front cover **28.** As discussed above, oil is used to provide lubrication between the moving components of the electric compressor **10.** During operation, the oil and the refrigerant become mixed. The oil separator **96** is necessary to separate the intermixed oil and refrigerant before the refrigerant leaves the electric compressor **10.**

Generally, refrigerant is released from the compression device **18** during each cycle, i.e., revolution (or orbit) of the orbiting scroll **66.** In the illustrated embodiment, refrigerant leaves the compression device **18** through the central orifice **84A** and two side orifices **84B** in the fixed scroll **26.** Release of the refrigerant through the orifices, **84A**, **84B** is controlled by the central reed **87A** and two side reeds **87B**, respectively. The multicavity pulsation muffler system **160** and the oil separator **96** are described in more detail below.

### Scroll Bearing Oil Orifice

The electric compressor **10** may include a scroll bearing oil injection orifice. As discussed above, the compression device **18** of the present disclosure includes a ball bearing **108.** In the illustrated embodiments, the ball bearing **108** is located between the swing-link mechanism **124** and the orbiting scroll **66.** However, as a result of the location of the ball bearing **108** within the compression device **18**, there may be limited oil delivery to the ball bearing **108** resulting in reduced durability. As shown in FIG. 9, the oil orifice **138** allows oil (and refrigerant) to travel from the discharge chamber **82** to the ball bearing **108** along the path **73** (which may be referred to as the "nose bleed" path).

The scroll-type electric compressor **10** may include a housing **12**, a refrigerant inlet port **68**, a refrigerant outlet port **70**, an inverter module **144**, a motor **54**, a drive shaft **90** and a compression device **18.** The housing **12** defines an intake volume **74** and a discharge volume **82.** The refrigerant inlet port **68** is coupled to the housing **12** and is configured to introduce the refrigerant to the intake volume **74.** The refrigerant outlet port **70** is coupled to the housing **12** and is configured to allow compressed refrigerant to exit the scroll-type electric compressor **10** from the discharge volume **82.** The inverter module **144** is mounted inside the housing **12** and adapted to convert direct current electrical power to alternating current electrical power. The motor **54** is mounted inside the housing **12.** The drive shaft **90** is coupled to the motor **54.** The compression device **18** receives the refrigerant from the intake volume **74** and compresses the refrigerant as the drive shaft **90** is rotated by the motor **54.** The compression device **18** includes a fixed scroll **26**, an orbiting scroll **66**, a swing-link mechanism **124**, a ball bearing **108** and a pin **136.**

The fixed scroll **26** is located within, and is fixed relative to, the housing **12.** The orbiting scroll **66** is coupled to the drive shaft **90.** The orbiting scroll **66** and the fixed scroll **26** form compression chambers **80** for receiving the refrigerant from the intake volume **72** and compressing the refrigerant as the drive shaft **90** is rotated about the center axis **90C.** The orbiting scroll **66** has a first side (or the lower surface) **66F** and a second side (or upper surface) **66G.** The orbiting scroll **66** has an oil aperture **140** through the orbiting scroll **66** from the first side **66F** to the second side **66G.**

The swing-link mechanism **124** is coupled to the drive shaft **90.** The ball bearing **108** is positioned between and adjacent to each of the orbiting scroll **66** and the swing-link mechanism **124.** The drive shaft **90**, orbiting scroll **66** and swing-link mechanism **124** are arranged to cause the orbiting scroll **66** to orbit the central axis **90C** in an eccentric orbit.

As shown in FIGS. 16B-16E, the tip of the orbiting scroll **66** includes a plug **136** and has an oil orifice **138.** The plug **136** may be press fit within the oil aperture **140** of the orbiting scroll **66.** The oil orifice **138** is configured to allow oil with a controlled flow rate or compressed refrigerant to pass through the orbiting scroll **66** to the ball bearing **108.**

The size of the oil orifice **138** may be tuned to the specifications of the electric compressor **10.** For example, given the specifications of the electric compressor **10**, the diameter of the oil orifice **138** may be chosen such that only oil is allowed to pass through and to limit the equalization of pressure between the first and second sides of the orbiting scroll **66.** By using a separate plug **136**, rather than machining the oil orifice **138** directly in the orbiting scroll **66**, manufacturing efficiencies may be achieved. And the plug **136** may have an oil orifice **138** that is specifically designed and tuned to allow for oil flow and refrigerant flow to increase or decrease depending on the diameter and geometry of the oil orifice **138.**

As shown in FIGS. 16D-16E, in one embodiment, the oil orifice **138** may have a first bore **138A** and a second bore **138B**, wherein a diameter of the first bore **138A** is less than a diameter of the second bore **138B.** For example, in one application of this embodiment the first bore 138A has an approximate diameter of 0.3 mm. The second bore **138B** has a diameter greater than the diameter of the first bore **138A** and is only used to shorten the length of the first bore **138A.** The flow of the oil and coolant is designed to provide thermal and lubricant to the ball bearing 108 supporting the radial forces created by the eccentric orbit of the orbiting scroll 66.

Further, as discussed above, the orbiting scroll **66** has an orbiting scroll base **66A** and an orbiting scroll lap **66B.** The orbiting scroll lap **66B** may have an orbiting scroll tail end **66C** and an orbiting scroll center end **66D.** As shown, the oil aperture **140** is located within the orbiting scroll center end **66D.** The plug **136** may be secured into the oil aperture 140, by press fit or any other method that will secure the plug **136.**

As shown in FIG. 9, the oil orifice **138** allows oil (and refrigerant) to travel from the discharge chamber **82** to the ball bearing **108** along the path **73** (which may be referred to as the "nose bleed" path).

### Bearing Oil Communication Hole

The electric compressor **10** may include one or more bearing oil communication holes. As discussed above, in the illustrated embodiment, a drive shaft **90** is rotated by the motor **54** to controllably actuate the compression device **18.** The drive shaft **90** has a first end **90A** and a second and **90B.** The housing **10** of the electric compressor **10** forms a first drive shaft supporting member **22B** and a second drive shaft support member **24A.** In the illustrated embodiment, the first drive shaft supporting member **22B** is formed in a motor side **22** of the inverter housing **22A** and the second drive shaft supporting member **24A** is formed within the center housing **24.** First and second ball bearings **62**, **64** are located within the first and second drive shaft support members **22B**, **24A.**

The location of the first drive shaft supporting members **22B** is not a flow-through area for refrigerant (and oil). This may result in a low lubricating condition and affect the durability of the electric compressor **10.**

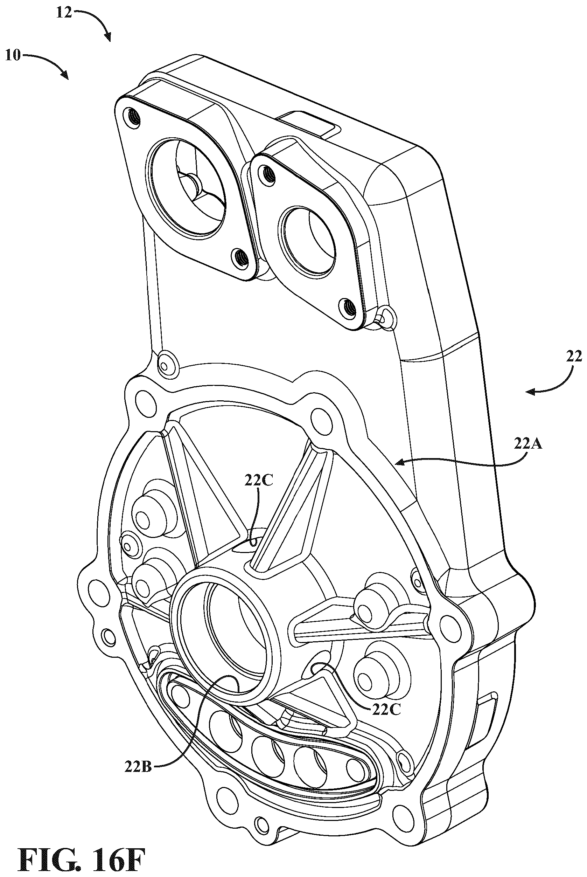

As shown in FIG. 16F, the first drive supporting member **22B** may include one or more holes **22C** to allow oil to enter the first drive support member **22B** and lubricate the first ball bearing **62.**

In the illustrated embodiment, the scroll-type electric compressor **10** includes a housing **12**, a first ball bearing **62**, a second ball bearing **64**, a refrigerant inlet port **68**, a refrigerant outlet port **70**, an inverter module **44**, a motor **54**, a drive shaft **90**, and a compression device **18.**

The housing **12** defines an intake volume **74** and a discharge volume **82** and includes first and second drive shaft supporting members **22B**, **24A.** The first ball bearing **62** is located within the first drive shaft supporting member **22B.** The first drive shaft support member **22B** of the housing **12** includes one or more oil communication holes **22C** for allowing oil to enter the first ball bearing **62.**

The second ball bearing **64** is located within the second drive shaft supporting member **24A.** The refrigerant inlet port **68** is coupled to the housing **12** and is configured to introduce the refrigerant to the intake volume **74.** The refrigerant outlet port **70** is coupled to the housing **12** and is configured to allow compressed refrigerant to exit the scroll-type electric compressor **10** from the discharge volume **82.** The inverter module **144** is mounted inside the housing **12** and is adapted to convert direct current electrical power to alternating current electrical power. The motor **54** is mounted inside the housing **12.** The drive shaft **90** is coupled to the motor **54.** The drive shaft **90** has a first end **90A** and a second end **90B.** The first end **90A** of the drive shaft **90** is positioned within the first bearing **62** and the second end **90B** of the drive shaft **90** is positioned within the second bearing **64.** The compression device **18** receives the refrigerant from the intake volume **74** and compresses the refrigerant as the drive shaft **90** is rotated by the motor **54.** As discussed above, in the illustrated embodiment, the first drive shaft support member **22** may be formed on the motor side **22A** of the inverter housing **22.**

The rotational movement within the motor section **16** of the compression device **18** creates a flow path and movement to the oil from the oil reservoir **98**, as shown by arrows **88** in FIG. 9. As shown the oil flows from the oil reservoir **98** toward the motor section **16** and continues toward the stator **58** and rotor **60.** The rotational motion of the orbiting scroll, rotor and drive shaft pulls the oil upward to mix with the inlet flow of the refrigerant path **72.** The rotational movement of the rotor **60** and drive shaft **90** will further propel the oil against the motor side **22A** of the inverter housing **22.** The motor side **22A** surface further includes a series of ribs **22D**, shown in FIG 16F. The ribs **22D** provide the needed rigidity for supporting the first drive shaft support member **22** and allow for a ridged backing and pocket to secure the first bearing **62.** The inverter housing 22 nay further defines an oil cavity (not shown) where the oil collected between the ribs **22D** is directed by gravity downward and into the oil. The ribs **22D** and the sloped surface of the motor side **22A** cooperate to capture and direct the oil splashed or propelled against the motor side **22A** by the rotor **60** or drive shaft **90**, to assist in increasing the oil flow into the oil cavity **22E** and first bearing **62.** FIG 16F illustrates two communication holes **22C**, but it is appreciated additional or less than 2 oil communication hole 22C may be included above and between the ribs 22D on the motor side 22A of the inverter housing 22. For example in the illustrated embodiment the hole is 3.5 mm in diameter and the motor side 22A includes a sloping wall between the ribs 22D. In addition, the motor side 22A may include a outer oil collection area 22

### Domed Inverter Cover

The scroll-type electric compressor **10** of the present invention may include a domed inverter cover **20.** The scroll-type electric compressor **10** includes the housing **12**, the refrigerant inlet port **68**, the refrigerant outlet port **70**, the inverter module **44**, the motor **54**, the drive shaft **90,** the compression device **18** and the inverter cover **20.** The housing **12** defines the intake volume **70** and the discharge volume **82.** The housing **12** has a generally cylindrical shape and the central axis **90C.** The refrigerant inlet port **68** is coupled to the housing **12** and is configured to introduce the refrigerant to the intake volume **70.** The refrigerant outlet port **82** is coupled to the housing **12** and is configured to allow compressed refrigerant to exit the scroll-type electric compressor **10** from the discharge volume **82.**

The inverter module **44** is mounted inside the housing **12** and adapted to convert direct current electrical power to alternating current electrical power. The motor **54** is mounted inside the housing **12.** The drive shaft **90** is coupled to the motor **54.** The compression device **18** is coupled to the drive shaft **90** and is configured to receive the refrigerant from the intake volume and to compress the refrigerant as the drive shaft **90** is rotated by the motor **54.**

As discussed above, the compression device **18** may rotate at a high speed (> 2,000 RPM) which may create undesirable noise, vibration, and harshness (NVH) and low durability conditions. In the prior art, the inverter cover **20** is generally flat and tends to amplify and/or focus, the vibrations from the compression device **18.**

To disperse vibrations rather than focus, the vibrations from the compression device **18**, the inverter back cover **20** of the electric scroll-like compressor **10** of the fifth aspect of the disclosure is provided with a generally curved or domed profile.

As shown in the FIGS., specifically FIGS. 1, 3 and 6, the inverter cover **20** is located at one end of the scroll-type electric compressor **10** and includes a first portion **20A** and a second portion **20B.** The first portion **20A** includes an apex or apex portion **20C** and is generally perpendicular to the central axis **90C** and has an apex **20C** and an outer perimeter **20D.** The first portion 20A has a relatively domed-shaped such that the inverter cover **20** has a curved profile from the apex **20C** towards the outer perimeter **20D.** The amount and location of the curvature may be dictated or limited by other considerations, such as packaging constraints, i.e., the space in which the electric scroll-type compressor **10** must fit, and constraints placed by internal components, i.e., location and size). The first portion **20A** may also have to incorporate other features, e.g., apertures to receive fastening bolts. The second portion **20B** may include a portion of the inverter cover **20** that is not domed, i.e., is relatively flat that is located about the perimeter of the inverter cover.

### Fixed Scroll having Modified Scroll Flooring

In a first aspect of the present invention, the scroll-type electric compressor **10** with a modified fixed scroll flooring is configured to compress a refrigerant. The scroll-type electric compressor **10** includes the housing **12**, the refrigerant inlet port **68**, the refrigerant outlet port **70**, the inverter module **44**, the motor **54**, the drive shaft **90**, and the compression device **18.** The housing **12** defines an intake volume **74** and a discharge volume **82.**

The refrigerant inlet port **68** is coupled to the housing **12** and is configured to introduce the refrigerant to the intake volume **74.** The refrigerant outlet port **70** is coupled to the housing **12** and is configured to allow compressed refrigerant to exit the scroll-type electric compressor **12** from the discharge volume **82.** The inverter module **144** is mounted inside the housing **12** and adapted to convert direct current electrical power to alternating current electrical power. The motor **54** is mounted inside the housing **12** and the drive shaft **90** is coupled to the motor **54.**

In general, and as described above, the compression device **18** receives the refrigerant from the intake volume **74** and compresses the refrigerant as the drive shaft **90** is rotated by the motor **54.**

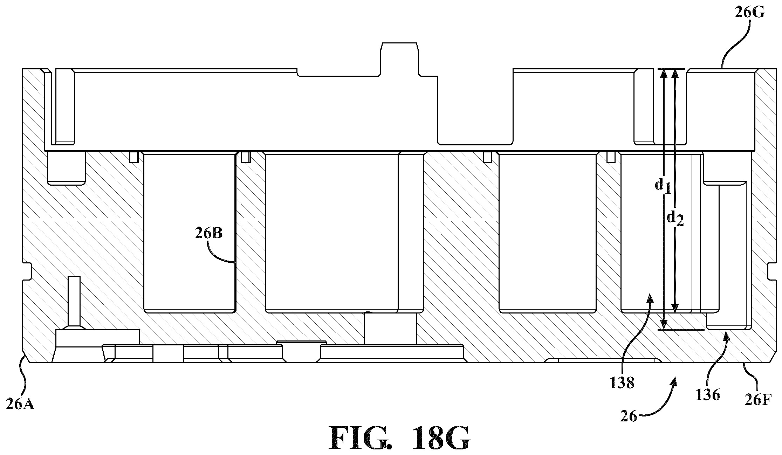

The compression device **18** includes a fixed scroll **26** and an orbiting scroll **66.** The compression device **18** defines antechamber volume **134.** The antechamber volume **134** (see FIGS. 18C and 18G) feeds refrigerant to the chambers **80** at the start of a compression cycle. During the compression cycle, when the chambers **80** close (as the laps **26B**, **66B** come into contact, the pressure within the antechamber volume **134** drops due to suction which can affect the efficiency of the electric compressor **10.** In one aspect of the present invention, it is desirable to increase the volume of the antechamber (to make additional refrigerant available to the compression device **18**). This increases the "capacitance" of the compression device **18** and smooths out the compression cycle.

In the illustrated embodiment, the base **26A**, **66A** of one of the fixed scroll **26** and the orbiting scroll **66** has a cutout **136** to increase the antechamber volume **134.**

In the illustrated embodiment, the cutout **136** is located in the floor or base **26A** of the fixed scroll **26.**

As shown, the fixed scroll **26** has a first side **26F** defined by fixed scroll base **26A** and a second side **26G** defined by a top surface of the fixed scroll lap **26B.** The fixed scroll lap **26B** extends from the fixed scroll base **26A** towards the second side **26G** of the fixed scroll **26.** As shown in FIGS. 18C and 18G, the cutout **136** in the floor of the fixed scroll base **26** defines a first portion which has a depth, **d₁**, which is greater than a depth, **d₂**, of a second portion **138.**

The size of the first portion or cutout **136** may be limited by a couple constraints. First, the depth, **d₁**, must leave sufficient material to maintain the structural integrity of the fixed scroll **26.** In addition, to ensure that the chamber **80** is sealed, the geometry of the cutout must remain outside the orbiting lap **66B**, to allow the chamber **80** to close and seal as shown in 17D. The cutout **136** may be provide additional volume within the antechamber **134** to allow the volumes within chambers **80** in 17D to be fully filled. The cutout **136** is limited by the path of the orbiting scroll 66B, and limitations to the floor and wall thickness needed to the fixed scroll 26. In addition, machine tooling and access to the floor of the fixed scroll may provide additional limitations to the size and areas outside the seal area of the orbiting scroll **66B.**

### Isolation/Constraint System

In a second aspect of the present invention, an isolation and constraint system **148** may be used to isolate the housing **12** from the oscillations and pulsations caused by the orbiting scroll **66.**

In a typical, scroll-type electric compressor, the motor and the fixed scroll are directly coupled to the housing. is directly coupled to the housing. As discussed above, guidance pins directly coupled to the housing may cooperate with ring shaped slots on the orbiting scroll to limit articulation of the orbiting scroll as it orbits the drive shaft. With this type of arrangement, oscillations and pumping pulsations from the orbiting scroll may be transmitted to the housing and through the mounts to the, e.g., vehicle structure.

The scroll-type electric compressor **10** is configured to compress a refrigerant. The scroll-type electric compressor includes the housing **12**, the refrigerant inlet port **68**, the refrigerant outlet port **70**, the inverter module **144**, the motor **54**, the drive shaft **90** and a compression device **18.** The housing **12** defines an intake volume **74** and a discharge volume **82** and has a generally cylindrical shape. The refrigerant inlet port **68** is coupled to the housing **12** and is configured to introduce the refrigerant to the intake volume **74.** The refrigerant outlet port **70** is coupled to the housing **12** and is configured to allow compressed refrigerant to exit the scroll-type electric compressor **12** from the discharge volume **82.** The inverter module **144** is mounted inside the housing **12** and adapted to convert direct current electrical power to alternating current electrical power. The motor **54** is mounted inside the housing **12.** The drive shaft **90** is coupled to the motor **54.** The compression device **18** is coupled to the drive shaft **90** for receiving the refrigerant from the intake volume **74** and compressing the refrigerant as the drive shaft **90** is rotated by the motor **54.**

As discussed above, the compression device **16** includes a fixed scroll **26** and an orbiting scroll **66.** The fixed scroll **26** is located within, and is fixed relative to, the housing **12.** The orbiting scroll **66** is coupled to the drive shaft **90.** The orbiting scroll **66** and the fixed scroll **26** form compression chambers **80** for receiving the refrigerant from the intake volume **74** and for compressing the refrigerant as the drive shaft **90** is rotated about the center axis **90C.**

The orbiting scroll **66** has a lower surface having a plurality of ring-shaped slots **66G** (see above).

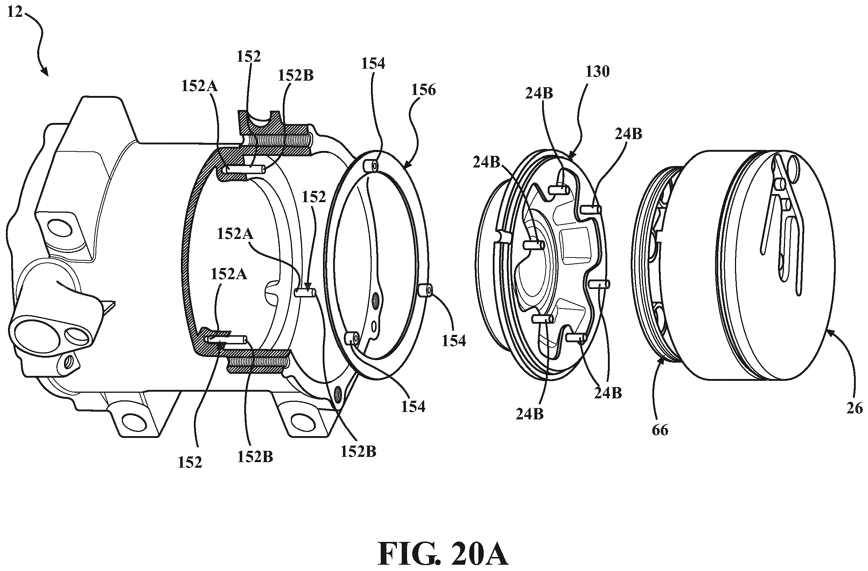

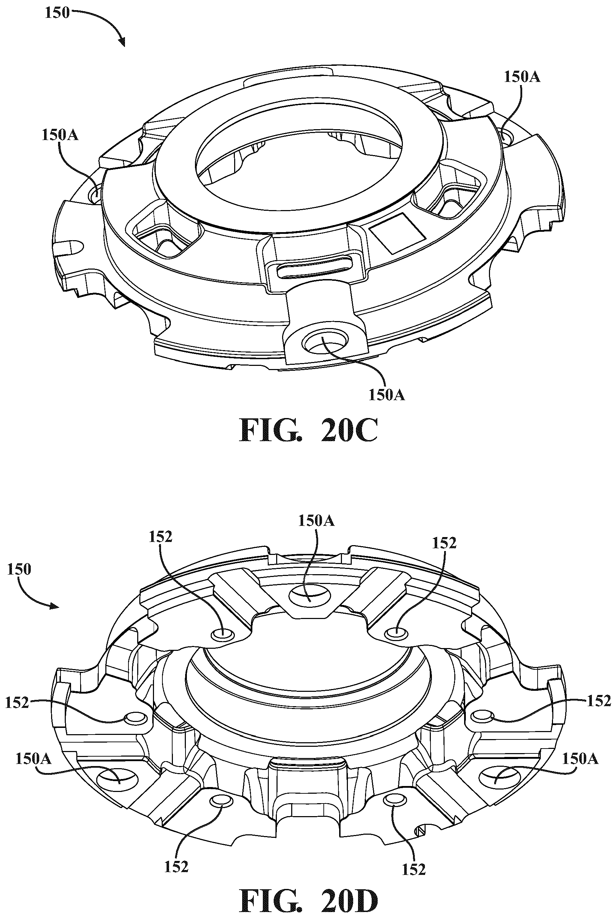

With specific reference to FIG. 20A, the scroll-type electric compressor **10** further includes a thrust body **150**, the plurality of articulating guidance pins **24B**, a plurality of mounting pins **152** and a plurality of isolating sleeves **154.** The thrust body **150** has a plurality of guidance pin apertures **152A.** The plurality of articulating guidance pins **24B** extend from the guidance pin apertures **152** and extend towards the compression section **18** and into the ring-shaped slots **66B.** The guidance pins **24B** are configured to limit articulation of the orbiting scroll **66** as the orbiting scroll **66** orbits about the central axis **90.**

Each mounting pin **152** has a housing end **152A** and a thrust body end **152B.** The housing end **152** is press fit within respective receiving apertures in the housing **12.** The thrust body end **152B** is cylindrical with an outer surface. The plurality of isolating sleeves **154** are composed from a flexible material, such as a chemically resistant synthetic rubber. One such material is ethylene propylene diene monomer (EPDM). The thrust body end **152** of each mounting pin **152** is encapsulated within a respective sleeve **154** and is received in a respective slot **150A** within the thrust body **150.** In this way, the only connection between the thrust body **150** and the housing **12** is through the mounting pins **152** which is isolated or insulated by the sleeves **154** to prevent or minimize vibrations from the orbiting scroll **66** from being transmitted to the housing **12.**

As shown in FIG. 20A, in one embodiment, the isolating sleeves **152** are integrally formed with a circular gasket or ring **156.**

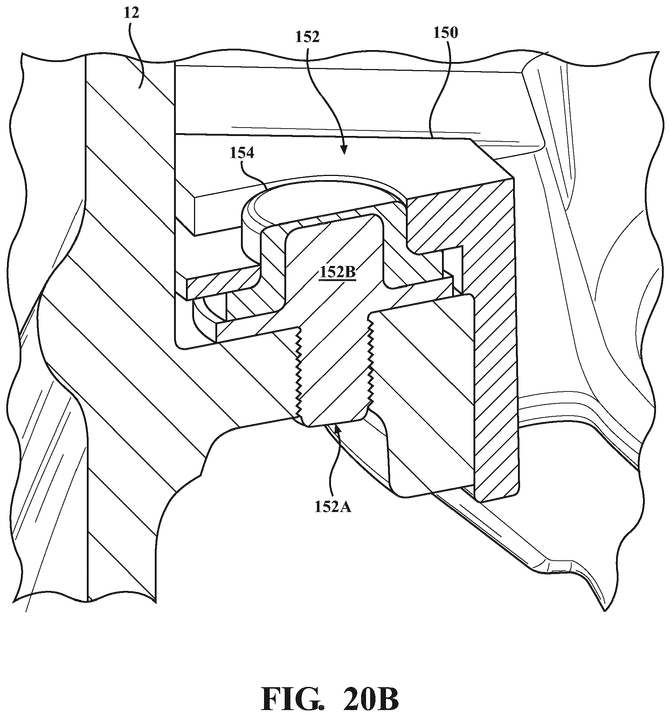

As shown in FIG. 20B, in another embodiment, the thrust body end **152B** of each mounting pin **152** is full encapsulated by the flexible material using, for example, an over-molding process. The outer surface of the of the isolating sleeves **154** may be rubbed to assist with the isolation.

### Electric Compressor Head Design

In a third aspect of the electric compressor **10** of the disclosure, a front cover **28** design includes an oil separator **96** and a three-reed reed mechanism **86.** As discussed below, the design of the front cover **28**, the fixed scroll **26** and the reed mechanism **86** define a multicavity pulsation muffler system.

In prior art electric compressors, refrigerant is released from the compression device once per revolution (or orbit) of the orbiting scroll. This creates a first order pulsation within the compressed refrigerant released by the electric compressor. The relative strong amplitude and low frequency of the pulsation creating in the refrigerant may excite other components (internal or external to the electric compressor) which may create undesirable noise, vibration and harshness (NVH) and low durability conditions.

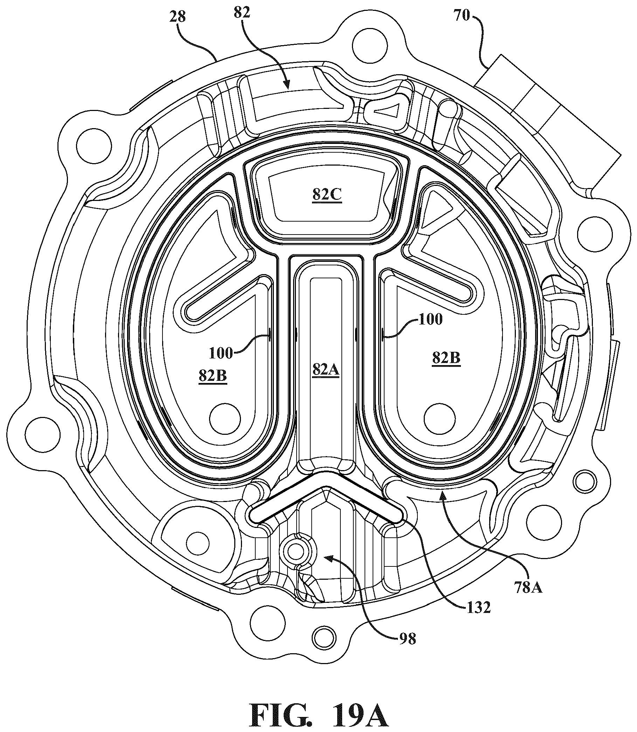

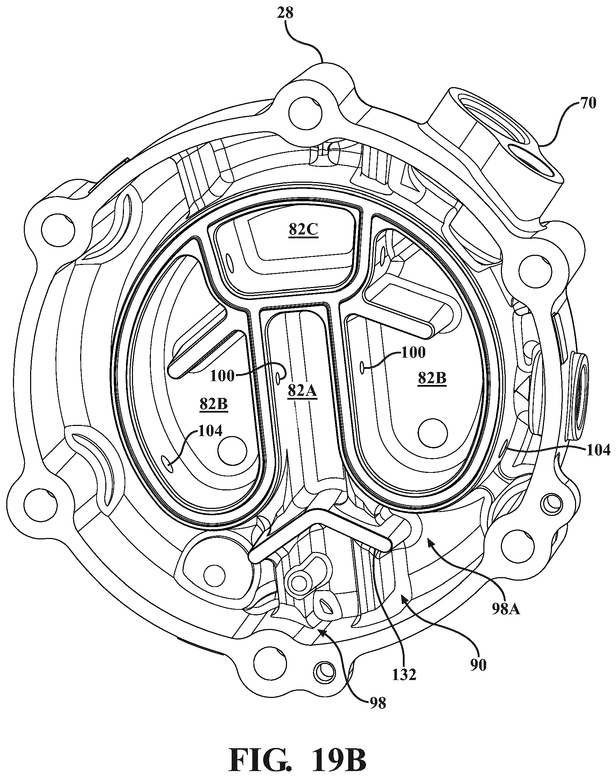

With reference to FIGS. 18C-18F and FIGS. 19A-19B, the multicavity pulsation muffler system **160** compressed refrigerant is released from the compression device **18** twice during a compression cycle. As discussed in more detail below, the compression device **18** includes two smaller secondary discharge ports are placed into (adjacent) two secondary discharge chambers, The secondary discharge chambers are downstream (in the discharge head) of the pressure drop from a central discharge port. As also described further below, the front cover **28** defines a parallel discharge path for refrigerant exiting the compression device **18** to the refrigerant outlet port **70.**

In the illustrated embodiment, the compressor **10** includes the housing **12**, the inverter module **44**, the motor **54**, and a compression device **18.** The housing **12** defines an intake volume **74** and a discharge volume **82.** The housing **12** has a generally cylindrical shape and a central axis **90C.** The inverter module **44** is mounted inside the housing **12** and adapted to convert direct current electrical power to alternating current electrical power. The motor **54** is mounted inside the housing.

The compression device **18** is coupled to the motor **54** for receiving the refrigerant from the intake volume **74** and compressing the refrigerant as the motor **54** is rotated.

The compression device **18** has a central compression device outlet orifice **84A** and first and second side compression device outlet orifices **84B** for controllably releasing compressed refrigerant into the discharge volume **82** during a compression cycle. The compression device **18** is configured to release compressed refrigerant into the discharge volume **82** via the first and second side compression device outlet orifices **84B** earlier in the compression cycle than refrigerant is released via the central discharge orifices **84A.**

In addition, the oil separator **96** utilizes two parallel paths between the compression device **18** and the refrigerant outlet port **70** to reduce the net pressure drop while maintaining the reduction in this pulsation.

In the illustrated embodiment, the oil separator **96** may be located in the discharge volume **82** and integrally formed with the discharge head or front cover **28.** As discussed above, oil is used to provide lubrication between the moving components of the electric compressor **10.** During operation, the oil and the refrigerant become mixed. The oil separator **96** is necessary to separate the intermixed oil and refrigerant before the refrigerant leaves the electric compressor **10.**

Generally, refrigerant is released from the compression device **18** during each cycle, i.e., revolution (or orbit) of the orbiting scroll **66.** In the illustrated embodiment, refrigerant leaves the compression device **18** through the central orifice **84A** and two side orifices **84B** in the fixed scroll **26.** Release of the refrigerant through the orifices, **84A**, **84B** is controlled by the central reed **87A** and two side reeds **87B**, respectively (see below).

In the illustrated embodiment, the oil separator **96** connects the discharge chambers (see below) by relatively small channels to create pressure drops between the chambers. This acts to smooth out the flow of compressed refrigerant out of the electric compressor **10.** Additionally, the oil separator **96** utilizes two parallel paths between the compression device **18** and the refrigerant outlet port **70** to reduce the net pressure drop while maintaining the reduction in this pulsation.

The oil separator **96** may include a series of partitions **98A** extending from an inner surface of the front cover **28.** As shown, the walls **98A** separate the discharge volume **82** into a central discharge chamber **82A**, two side discharge chambers **82B**, am upper discharge chamber **82C** and the oil reservoir **98.** The central discharge chamber **82A** is adjacent the central reed **87A** and receives intermixed pressurized refrigerant and oil from the compression device **18** through the central orifice **84** via the reed **87A.** The side discharge chamber **82B** are adjacent respective side reed **87B** and receives intermixed pressurized refrigerant and oil from the compression device **18** through the side orifices **84B** via respective reeds **87B.** Generally, the pressure of the refrigerant in the chambers is: central discharge chamber **82A** > side discharge chambers **82B** > upper discharge chamber **82C.**

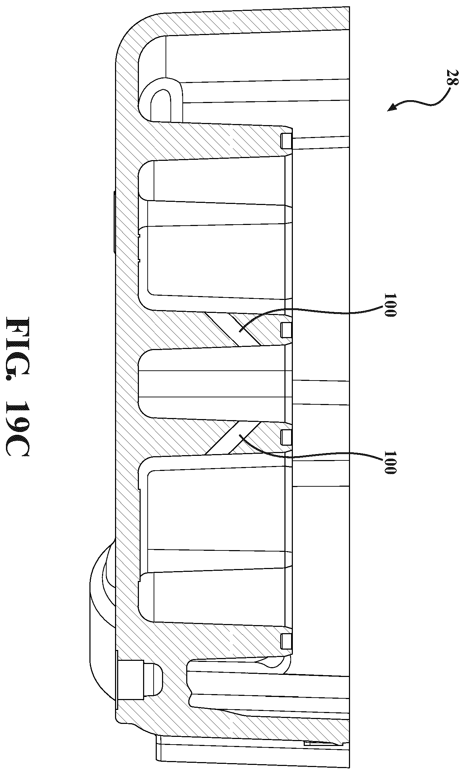

The central discharge chamber **82A** is in fluid communication with the two side discharge chambers **82B** via respective side channels **100** which are in fluid communication with the upper discharge chamber **82C** and the oil reservoir **98** via upper discharge channels **102** and lower discharge channels **104**, respectively. In one embodiment, the side channels **100** extend at an acute angle through to the side discharge chambers **82B.** The angle of the channels **100** further directs the impact of the discharging mixture of refrigerant and oil to further improve the separation and increase the amount of oil separated out by the oil separator **96.** For example, in FIG 19C, the side channels **100** extend through and downward into the side discharge chambers **82B** at approximately a 45-degree angle relative to the inner wall of the central discharge chamber **82A.** However, the angle may vary depending on the application or surface contours of the side discharge chambers **82C**, and in some variations may increase to approximately 60 degrees. The angle may vary but is designed to direct the flow to create turbulence and direct the flow impact to create a tortuous path within the side discharge chambers **82C** to increase the separation of oil into the lower discharge channels **104.**

As shown, the oil separator **96** includes the central discharge chamber **82A** and a lower baffle **132.** In the illustrated embodiment, the lower baffle **132** is chevron-shaped (inverted "v") and is located between the central chamber **82** and the oil reservoir **98.** The shape of the lower baffle **132** creates an area of low pressure directly underneath. Intermixed oil and refrigerant enter the central discharge chamber **82A** and is drawn downward by the low-pressure area. The oil and refrigerant are separated when the intermixed oil and refrigerant comes into contact with the upper surface of the lower baffle **132.** The oil drops into the oil reservoir **98.**

Refrigerant may enter the side discharge chambers **82B** via the side channels **100** and/or lower discharge channels **104.** Refrigerant may then enter the upper discharge chamber **82B** and then exit via the refrigerant outlet port **70.**

The oil reservoir **98** is located below the pair of side chambers and is connected thereto via the respective lower discharge channels **104.** The oil reservoir is configured to receive oil separated from the compressed refrigerant in the side chambers. Gravity acting on the oil assists in the separation and the oil falls through the lower discharge channels **104** located in the side discharge chambers **82B** into the oil reservoir **98.**

As discussed above, the reed mechanism **86** includes a discharge reed **86A** and a reed retainer **86B** which define the reeds **87A**, **87B.** The discharge reed **86A** is used to tune the pressure at which the refrigerant is allowed to exit the compression device **18** through the central orifice **84A** and two side orifices **84B**, respectively.

### Assembly and Electric Compressor with Non-Radial Clamping Feature

In another aspect of the present invention, the electric compressor **10** includes a plurality of clamping mechanisms **170** spaced about the outer diameter of the motor section **16.** As discussed in more detail below, the clamping mechanisms **170** are configured to constrain the motor section 16 within the outer housing **12** (see below). The plurality of clamping mechanisms **170** may be utilized with the different embodiments of electric compressor **10** discussed, including with any, or a combination of, the different features discussed above.

In a first embodiment of the present invention, the electric compressor **10** is configured to compress a refrigerant. The electric compressor **10** includes the housing or outer housing **12**, the refrigerant inlet port **68**, the refrigerant outlet port **70**, the inverter module **44**, the motor **54**, the drive shaft **90**, the plurality of clamping mechanisms **170**, and a compression device **18.** The housing **12** defines an intake volume **74** and a discharge volume **82** and has a generally cylindrical shape and a central axis **90C.**

The refrigerant inlet port **68** is coupled to the housing **12** and configured to introduce the refrigerant to the intake volume **74.** The refrigerant outlet port **70** is coupled to the housing **12** and is configured to allow compressed refrigerant to exit the electric compressor **10** from the discharge volume **82.** The inverter module **44** is mounted inside the housing **12** and is adapted to convert direct current electrical power to alternating current electrical power. The motor **54** is mounted inside the housing **12.** The drive shaft **90** is coupled to the motor **54.** The plurality of clamping mechanisms **170** are spaced about the outer diameter of the motor and are configured to constrain the motor **54** within housing **12**. The compression device **18** is coupled to the drive shaft **90** and receives the refrigerant from the intake volume and compresses the refrigerant as the drive shaft **90** is rotated by the motor **54**. The clamping mechanisms **170** are discussed in further detail below.

In a second embodiment of the present invention, an assembly **172** includes a housing **12**, a motor **54**, a drive shaft **90**, and a plurality of clamping mechanisms **170.** The housing **12** has a generally cylindrical shape and has a central axis **90C.** The motor **54** is mounted inside the housing **12.** The drive shaft **90** is coupled to the motor **54.** The plurality of clamping mechanisms **170** are spaced about the outer diameter of the motor **54** and are configured to constrain the motor **54** within housing **12.**

In a third embodiment of the present invention, an electric compressor **10** having a central axis **90C** and being configured to compress a refrigerant, is provided. The compressor **10** includes the housing **12**, the refrigerant inlet port **68**, the refrigerant outlet port **70**, the inverter section **14**, the motor section **16**, the compression device **18** and the plurality of clamping mechanisms **170.**

The housing **12** defines an intake volume **74** and a discharge volume **82.** The refrigerant inlet port **68** is coupled to the housing **12** and is configured to introduce the refrigerant to the intake volume **74.** The refrigerant outlet port **70** is coupled to the housing **12** and is configured to allow compressed refrigerant to exit the electric compressor **12** from the discharge volume **82.**

The inverter section **14** includes an inverter housing **22**, an inverter back cover **20**, and an inverter module **44.** The inverter back cover **20** is connected to the inverter housing **22** and forms an inverter cavity **30.** The inverter module **44** is mounted inside the inverter cavity **30** and is adapted to convert direct current electrical power to alternating current electrical power. As discussed above, the inverter section 14 provides power to the motor **54** via the terminals **54A** that engage or are electrically coupled to the coils of the stator **58.**

The motor section **16** includes the drive shaft **90** and the motor **54.** The drive shaft **90** is located within the housing **12.** The motor **54** is located within the housing **12** to controllably rotate the drive shaft **90.**

The compression device **18** is coupled to the drive shaft **90** for receiving the refrigerant from the intake volume **74** and for compressing the refrigerant as the drive shaft **90** is rotated by the motor **54.** The compression device **18** includes a fixed scroll **26** and an orbiting scroll **66.** The fixed scroll **26** is located within, and being fixed relative to, the housing **12.** The orbiting scroll **66** is coupled to the drive shaft **90.** The orbiting scroll **66** and the fixed scroll **26** form compression chambers **58** for receiving the refrigerant from the intake volume **74** and for compressing the refrigerant as the drive shaft **90** is rotated.

With specific reference to FIGS. 22A-22E, the plurality of clamping mechanisms **170** are spaced about the outer diameter of the motor **54** and are configured to constrain the motor **54** within housing **12.** In one aspect of the present invention, the compressor **10** includes an even number of clamping mechanisms **170** spaced equidistantly about the perimeter of the motor **54.** In the illustrated embodiment, the compressor **10** includes four clamping mechanisms **170** spaced about the perimeter of the motor **54.**

As discussed above, the housing **12** includes a motor cavity **56** with an inner diameter **174.** In the illustrated embodiment, the motor **54** includes a stator **58** having an outer diameter **176.** In one aspect of the present invention, the outer diameter **176** of the stator **58** and the inner diameter **176** of the motor cavity **58** are configured to establish a slip fit to maintain concentricity therebetween (without deforming the outer geometry of the stator **58** or motor **54**). In one embodiment, the slip fit between the outer diameter **176** of the stator **58** and the inner diameter **174** of the motor cavity **56** is established by an interference therebetween. For example, in a specific embodiment, the interference between the outer diameter **176** of the stator **58** and the inner diameter **174** of the motor cavity **56** may be between -25 and 75 microns.

As shown in the illustrated embodiment, each of the plurality of clamping mechanisms **170** include a tab **178** located on the outer diameter **176** of the motor **54** or stator **58** and a corresponding channel **180** located on the inner diameter **174** of the housing **12.** Each channel **180** is configured to receive a respective tab **178.** It should be noted that in an alternative embodiment, the tabs **178** may be located on the inner diameter **174** of the housing **12** and the channels **180** may be located on the outer diameter **176** of the motor **54** or stator **58.**

Further, each tab **178** has a first and second sides **178A**, **178B.** A lateral clamping force (indicated by arrows **182**) is applied to each of the first and second sides **178A, 178B** of each tab **178** by opposing sides **180A, 180B** of the respective channel **180.** The lateral clamping force may be established by an interference between the first and second sides **178A, 178B** of each tab **178** by the opposing sides **180A, 180B** of the respective channel **180.** For instance, in a non-limiting example, the interference between the first and second sides **178A, 178B** of each tab **178** and the opposing sides **180A, 180B** of the channel **180** is 100-200 microns.

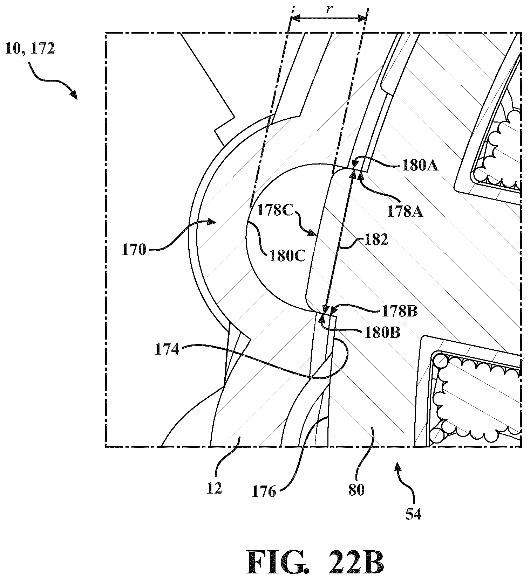

In addition, each tab **178** has a top surface **178C** and each channel **180** has an outer surface **180C.** The top surface **178C** of each tab **178** and the outer surface **180C** of the respective channel **180** has a radial clearance, *r* (see FIG. 22B). The radial clearance, *r,* is used to prevent a clamping force or radial force from being applied to the stator **58** via the clamping mechanisms **170.** In one non-limiting embodiment, the radial clearance is between 0 and 100 microns.

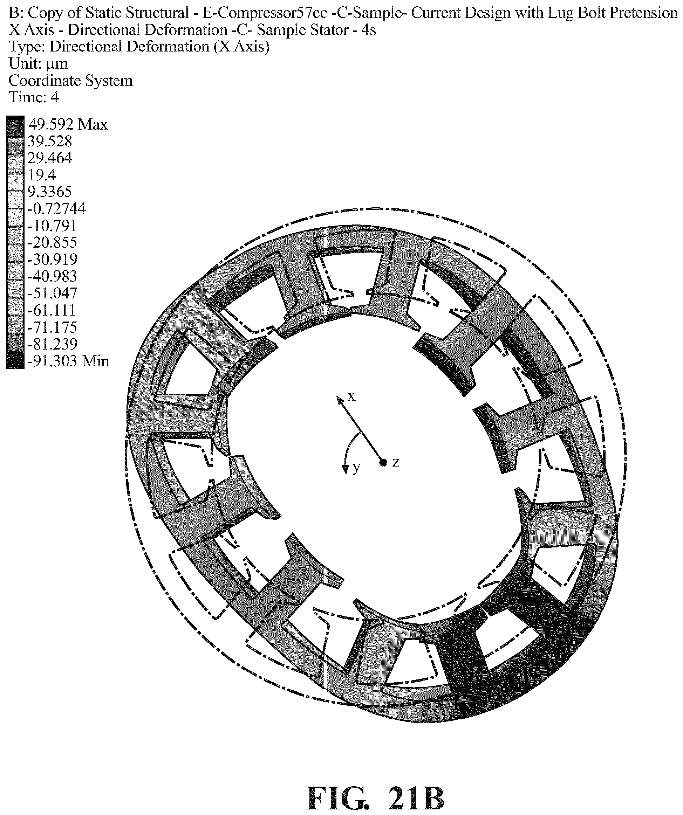

The radial clearance, *r*, is illustrated as an arcuate area between the top surface 178C and the outer surface **180** of the channel **180** of the housing **12.** The radial clearance, *r*, for example may be a rectangular area extending along the length of the top surface **178C** between the opposing sides **180A**, **180B.** The radial clearance, r, is positioned above the top surface **178C** to reduce any radially outward force that may cause deformation illustrated in the prior art FIGS. 21A and 21B.

The motor **54** or stator **58** is held in place relative to the housing **12** by the lateral forces **182.** The motor **54** is held concentrically within the motor cavity **56** by the slip fit between the outer diameter **176** of the stator **58** and the inner diameter **176** of the motor cavity **58.**

The slip fit may be a tight slip fit to maintain the concentricity of the stator **58** to the housing, however, still avoiding the interference fit to avoid outward radial forces that may deform the housing or stator. The addition, and by utilizing the tabs sides **178A**, **178B** with the interference fit to the opposing sides **180A, 180B** of the channel **180**, secures the stator **58**, but reduces the need for an interference and outward radial forces along the length of the stator **58**, and further reduces the possibility of a radial distortion of housing **12** reducing the concentrical relationship between the stator and the driven rotating components of the motor.

The foregoing invention has been described in accordance with the relevant legal standards, thus the description is exemplary rather than limiting in nature. Variations and modifications to the disclosed embodiment may become apparent to those skilled in the art and fall within the scope of the invention.

## Claims

1. An assembly (172), comprising:
a housing (12) having a generally cylindrical shape and having a central axis (90C);
a motor (54) mounted inside the housing (12);
a drive shaft (90) coupled to the motor (54); and
a plurality of clamping mechanisms (170) spaced about the outer diameter of the motor (54) configured to constrain the motor (54) within housing (12),
**characterized**
**in that** each of the plurality of clamping mechanisms (170) include a tab (178) located on the outer diameter of the motor (54) or on the inner diameter of the housing (12) and a channel (180) located on the inner diameter of the housing (12) or on the outer diameter of the motor (54), each channel (180) being configured receive a respective tab (178).

2. The assembly (172), as set forth in claim 1, wherein the housing (12) includes an inner motor cavity (56) having an inner diameter, the motor (54) including a stator (58) having an outer diameter, wherein the outer diameter of the stator (58) and the inner diameter inner motor cavity (56) are configured to establish a slip fit to maintain concentricity therebetween.

3. The assembly (172), as set forth in claim, as set forth in claim 2, wherein the slip fit between wherein the outer diameter of the stator (58) and the inner diameter is established by an interference therebetween.

4. The assembly (172), as set forth in claim 3, wherein the interference between the outer diameter of the stator (58) and the inner diameter is between -25 and 75 microns.

5. The assembly (172), as set forth in claim 4, each tab (178) has a first and second sides (178A, 178B) , wherein a lateral clamping force is applied to each of the first and second sides (178A, 178B) of each tab (178) by opposing sides (180A, 180B) of the channel (180).

6. The assembly (172), as set forth in claim 5, wherein the lateral clamping force is established by an interference therebetween.

7. The assembly (172), as set forth in claim 6, wherein the interference between the first and second sides (178A, 178B) of each tab (178) and the opposing side (180A, 180B) of the channel (180) is 100-200 microns.

8. The assembly (172), as set forth in claim 1, wherein each tab (178) has a top surface (178C) and each channel (180) has an outer surface (180C), the top surface (178C) of each tab (178) and the outer surface (180C) of a respective channel (180) having a radial clearance (r).

9. The assembly (172), as set forth in claim 8, wherein the radial clearance (r) is between 0 and 100 microns.

10. An electric compressor (10) configured to compress a refrigerant, comprising:
an assembly (172) according to any one of claims 1 to 9, the housing (12) of assembly (172) defining an intake volume (74) and a discharge volume (82),
a refrigerant inlet port (68) coupled to the housing (12) and configured to introduce the refrigerant to the intake volume (74);
a refrigerant outlet port (70) coupled to the housing (12) and configured to allow compressed refrigerant to exit the electric compressor (10) from the discharge volume (82);
an inverter module (144) mounted inside the housing (12) and adapted to convert direct current electrical power to alternating current electrical power;
a compression device (18) coupled to the drive shaft (90), for receiving the refrigerant from the intake volume (74) and compressing the refrigerant as the drive shaft (90) is rotated by the motor (54).

11. The electric compressor (10), as set forth in claim 10, further comprising:
an inverter section (14) including:
an inverter housing (22),
an inverter back cover (20) connected to the inverter housing (22) and forming an inverter cavity (30),
an inverter module (44) mounted inside the inverter cavity (30) and adapted to convert direct current electrical power to alternating current electrical power;
a motor section (16) including:
the drive shaft (90) located within the housing (12), having first and second ends (90A, 90B) and defining a center axis (90C), and
the motor (54) located within the housing (12) to controllably rotate the drive shaft (90) about the center axis (90C),
the compression device (18) coupled to the drive shaft (90), for receiving the refrigerant from the intake volume (74) and compressing the refrigerant as the drive shaft (90) is rotated by the motor (54), the compression device (18) including:
a fixed scroll (26) located within, and being fixed relative to, the housing (12);
an orbiting scroll (66) coupled to the drive shaft (90), the orbiting scroll (66) and the fixed scroll (26) forming compression chambers (80) for receiving the refrigerant from the intake volume (74) and compressing the refrigerant as the drive shaft (90) is rotated about the center axis (90C).

## Patentansprüche

1. Baugruppe (172), umfassend:
ein Gehäuse (12) mit im Allgemeinen zylindrischer Form und einer Mittelachse (90C);
einen im Gehäuse (12) montierten Motor (54);
eine Antriebswelle (90), die mit dem Motor (54) gekoppelt ist; und
eine Vielzahl von Klemmmechanismen (170), die um den Außendurchmesser des Motors (54) beabstandet angeordnet sind und dazu dienen, den Motor (54) innerhalb des Gehäuses (12) zu halten,
**dadurch gekennzeichnet,**
**dass** jeder der Vielzahl von Klemmmechanismen (170) eine Lasche (178) aufweist, die sich am Außendurchmesser des Motors (54) oder am Innendurchmesser des Gehäuses (12) befindet, sowie einen Kanal (180), der sich am Innendurchmesser des Gehäuses (12) oder am Außendurchmesser des Motors (54) befindet, wobei jeder Kanal (180) so konfiguriert ist, dass er eine entsprechende Lasche (178) aufnehmen kann.

2. Baugruppe (172) nach Anspruch 1, wobei das Gehäuse (12) einen inneren Motorraum (56) mit einem Innendurchmesser einschließt, der Motor (54) einen Stator (58) mit einem Außendurchmesser einschließt, wobei der Außendurchmesser des Stators (58) und der Innendurchmesser des inneren Motorraums (56) so konfiguriert sind, dass eine Gleitpassung zur Aufrechterhaltung der Konzentrizität zwischen ihnen hergestellt wird.

3. Baugruppe (172) nach Anspruch 2, wobei die Gleitpassung zwischen dem Außendurchmesser des Stators (58) und dem Innendurchmesser durch eine Überdeckung zwischen diesen beiden Teilen hergestellt wird.

4. Baugruppe (172) nach Anspruch 3, wobei die Überdeckung zwischen dem Außendurchmesser des Stators (58) und dem Innendurchmesser zwischen -25 und 75 Mikrometern liegt.

5. Baugruppe (172) nach Anspruch 4, wobei jede Lasche (178) eine erste und eine zweite Seite (178A, 178B) aufweist, wobei auf jede der ersten und zweiten Seiten (178A, 178B) jeder Lasche (178) durch gegenüberliegende Seiten (180A, 180B) des Kanals (180) eine seitliche Klemmkraft ausgeübt wird.

6. Baugruppe (172) nach Anspruch 5, wobei die seitliche Klemmkraft durch eine Überdeckung zwischen den beiden Elementen erzeugt wird.

7. Baugruppe (172) nach Anspruch 6, wobei die Überdeckung zwischen der ersten und zweiten Seite (178A, 178B) jeder Lasche (178) und der gegenüberliegenden Seite (180A, 180B) des Kanals (180) 100-200 Mikrometer beträgt.

8. Baugruppe (172) nach Anspruch 1, wobei jede Lasche (178) eine Oberseite (178C) und jeder Kanal (180) eine Außenfläche (180C) aufweist, wobei die Oberseite (178C) jeder Lasche (178) und die Außenfläche (180C) eines jeweiligen Kanals (180) ein radiales Spiel (r) aufweisen.

9. Baugruppe (172) nach Anspruch 8, wobei das radiale Spiel (r) zwischen 0 und 100 Mikrometern liegt.

10. Elektrischer Kompressor (10), konfiguriert zum Komprimieren eines Kältemittels, umfassend:
eine Baugruppe (172) nach einem der Ansprüche 1 bis 9, wobei das Gehäuse (12) der Baugruppe (172) ein Einlassvolumen (74) und ein Auslassvolumen (82) definiert,
eine Kältemitteleinlassöffnung (68), die mit dem Gehäuse (12) gekoppelt ist und so konfiguriert ist, dass sie das Kältemittel in das Einlassvolumen (74) einleitet;
eine Kältemittelauslassöffnung (70), die mit dem Gehäuse (12) gekoppelt ist und so konfiguriert ist, dass komprimiertes Kältemittel aus dem Auslassvolumen (82) des elektrischen Verdichters (10) austreten kann;
ein im Gehäuse (12) montiertes Wechselrichtermodul (144), das zur Umwandlung von elektrischem Gleichstrom in elektrischen Wechselstrom ausgelegt ist;
eine Kompressionsvorrichtung (18), die mit der Antriebswelle (90) gekoppelt ist, zum Aufnehmen des Kältemittels aus dem Einlassvolumen (74) und zum Komprimieren des Kältemittels während die Antriebswelle (90) vom Motor (54) gedreht wird.

11. Elektrischer Kompressor (10) nach Anspruch 10, der weiter Folgendes umfasst:
einen Wechselrichterabschnitt (14), einschließend:
ein Wechselrichtergehäuse (22),
eine Wechselrichter-Rückabdeckung (20), die mit dem Wechselrichtergehäuse (22) verbunden ist und einen Wechselrichterhohlraum (30) bildet,
ein im Inneren des Wechselrichterhohlraums (30) montiertes Wechselrichtermodul (44), das zur Umwandlung von elektrischem Gleichstrom in elektrischem Wechselstrom ausgelegt ist;
einen Motorabschnitt (16), einschließend:
die im Gehäuse (12) angeordnete Antriebswelle (90), die ein erstes und ein zweites Ende (90A, 90B) aufweist und eine Mittelachse (90C) definiert, und
der im Gehäuse (12) angeordnete Motor (54), der die Antriebswelle (90) steuerbar um die Mittelachse (90C) dreht,
die mit der Antriebswelle (90) gekoppelte Kompressionsvorrichtung (18) zum Aufnehmen des Kältemittels aus dem Einlassvolumen (74) und zum Verdichten des Kältemittels während der Drehung der Antriebswelle (90) durch den Motor (54), wobei die Kompressionsvorrichtung (18) Folgendes einschließt:
eine feststehende Schnecke (26), die sich innerhalb des Gehäuses (12) befindet und relativ zu diesem feststeht;
eine mit der Antriebswelle (90) gekoppelte, umlaufende Schnecke (66), wobei die umlaufende Schnecke (66) und die feststehende Schnecke (26) Kompressionskammern (80) bilden, die das Kältemittel aus dem Einlassvolumen (74) aufnehmen und es komprimieren, während die Antriebswelle (90) um die Mittelachse (90C) gedreht wird.

## Revendications

1. Ensemble (172), comprenant :
un boîtier (12) présentant une forme généralement cylindrique et présentant un axe central (90C) ;
un moteur (54) monté à l'intérieur du boîtier (12) ;
un arbre de transmission (90) couplé au moteur (54) ; et
une pluralité de mécanismes de serrage (170) espacés autour du diamètre extérieur du moteur (54) configurés pour contraindre le moteur (54) à l'intérieur du boîtier (12),
**caractérisé**
**en ce que** chacun des mécanismes de serrage (170) inclut une languette (178) située sur le diamètre extérieur du moteur (54) ou sur le diamètre intérieur du boîtier (12) et un canal (180) situé sur le diamètre intérieur du boîtier (12) ou sur le diamètre extérieur du moteur (54), chaque canal (180) étant configuré pour recevoir une languette (178) respective.

2. Ensemble (172), tel que défini dans la revendication 1, dans lequel le boîtier (12) inclut une cavité de moteur interne (56) présentant un diamètre intérieur, le moteur (54) incluant un stator (58) présentant un diamètre extérieur, dans lequel le diamètre extérieur du stator (58) et le diamètre intérieur de la cavité de moteur interne (56) sont configurés pour établir un ajustement glissant afin de maintenir la concentricité entre eux.

3. Ensemble (172), tel que défini dans la revendication, tel que défini dans la revendication 2, dans lequel l'ajustement glissant entre le diamètre extérieur du stator (58) et le diamètre intérieur est établi par une interférence entre eux.

4. Ensemble (172), tel que défini dans la revendication 3, dans lequel l'interférence entre le diamètre extérieur du stator (58) et le diamètre intérieur est comprise entre -25 et 75 microns.

5. Ensemble (172), tel que défini dans la revendication 4, chaque languette (178) présente un premier et un second côté (178A, 178B), dans lequel une force de serrage latérale est appliquée à chacun des premier et second côtés (178A, 178B) de chaque languette (178) par les côtés opposés (180A, 180B) du canal (180).

6. Ensemble (172), tel que défini dans la revendication 5, dans lequel la force de serrage latérale est établie par une interférence entre eux.

7. Ensemble (172), tel que défini dans la revendication 6, dans lequel l'interférence entre les premier et second côtés (178A, 178B) de chaque languette (178) et le côté opposé (180A, 180B) du canal (180) est de 100 à 200 microns.

8. Ensemble (172), tel que défini dans la revendication 1, dans lequel chaque languette (178) présente une surface supérieure (178C) et chaque canal (180) présente une surface extérieure (180C), la surface supérieure (178C) de chaque languette (178) et la surface extérieure (180C) d'un canal respectif (180) présentant un jeu radial (r).

9. Ensemble (172), tel que défini dans la revendication 8, dans lequel le jeu radial (r) est compris entre 0 et 100 microns.

10. Compresseur électrique (10) configuré pour comprimer un fluide frigorigène, comprenant :
un ensemble (172) selon l'une quelconque des revendications 1 à 9, le boîtier (12) de l'ensemble (172) définissant un volume d'admission (74) et un volume de refoulement (82),
un orifice d'entrée de réfrigérant (68) couplé au boîtier (12) et configuré pour introduire le réfrigérant dans le volume d'admission (74) ;
un orifice de sortie de réfrigérant (70) couplé au boîtier (12) et configuré pour permettre au réfrigérant comprimé de sortir du compresseur électrique (10) du volume de refoulement (82) ;
un module onduleur (144) monté à l'intérieur du boîtier (12) et adapté pour convertir l'énergie électrique en courant continu en énergie électrique en courant alternatif ;
un dispositif de compression (18) couplé à l'arbre d'entraînement (90), pour recevoir le réfrigérant du volume d'admission (74) et comprimer le réfrigérant lorsque l'arbre d'entraînement (90) est mis en rotation par le moteur (54).

11. Compresseur électrique (10), tel que décrit dans la revendication 10, comprenant en outre :
une section d'onduleur (14) incluant :
un boîtier d'onduleur (22),
un couvercle arrière d'onduleur (20) relié au boîtier de l'onduleur (22) et formant une cavité d'onduleur (30),
un module onduleur (44) monté à l'intérieur de la cavité de l'onduleur (30) et adapté pour convertir l'énergie électrique en courant continu en énergie électrique en courant alternatif ;
une section moteur (16) incluant :
l'arbre d'entraînement (90) situé dans le carter (12), présentant une première et une seconde extrémité (90A, 90B) et définissant un axe central (90C), et
le moteur (54) situé dans le boîtier (12) pour faire tourner de manière commandée l'arbre d'entraînement (90) autour de l'axe central (90C),
le dispositif de compression (18) couplé à l'arbre d'entraînement (90), destiné à recevoir le réfrigérant provenant du volume d'admission (74) et à comprimer le réfrigérant lorsque l'arbre d'entraînement (90) est mis en rotation par le moteur (54), le dispositif de compression (18) incluant :
un rouleau fixe (26) situé à l'intérieur et étant fixe par rapport à celui-ci (12) ;
une spirale orbitale (66) couplée à l'arbre d'entraînement (90), la spirale orbitale (66) et la spirale fixe (26) formant des chambres de compression (80) pour recevoir le réfrigérant du volume d'admission (74) et comprimer le réfrigérant lorsque l'arbre d'entraînement (90) tourne autour de l'axe central (90C).
